# FASCICULE DE BREVET EUROPEEN

(11) **EP 2 192 034 B1**
(45) Date de publication et mention de la délivrance du brevet: **25.07.2012**
(21) Numéro de dépôt: 10152483.3
(22) Date de dépôt: 25.06.2008
(51) Int. Cl.: B62J 23/00, F02B 77/11, F16M 1/00, B62M 6/20, F16D 7/02, F16D 43/21, F16D 43/18

(54) **Assistance thermique pour vélo**
Thermisches Hilfssystem für Fahrrad
Thermal assistance for bicycle

(30) Priorité: 26.06.2007 FR 0704566
(43) Date de publication de la demande: 02.06.2010
(62) Demande divisionnaire de: 08826761.2
(73) Titulaire: COMMISSARIAT A L'ENERGIE ATOMIQUE ET AUX ENERGIES ALTERNATIVES, 75015 Paris (FR); Pesenti, Yvan Philippe Gilles, 38640 Claix (FR)
(72) Inventeur: Pesenti, Yvan Philippe Gilles, 38640, Claix (FR)
(74) Mandataire: Novaimo

(56) Documents cités:
- WO-A2-2006/090213
- US-A- 4 397 369
- US-A- 5 941 332

## Description

### Domaine de l'invention :

Depuis quelques années nous voyons arriver sur le marché, un nombre grandissant, de vélos assistés par moteur électrique. Ces vélos sont réellement étudiés pour que le cycliste collabore avec son assistance et le moteur électrique ne peut faire avancer le vélo seul, comme sur des réalisations antérieures. L'apport du cycliste permet d'allonger un peu le rayon d'action, tandis que l'assistance procure à l'utilisateur, la sensation d'être en très grande forme.

Ces engins sont loin d'être tous équivalents dans leur efficacité, ils diffèrent par leur moteur, la cinématique par laquelle il agit, la gestion de l'assistance, les batteries et le vélo sur lequel est montée l'assistance.
- Les moteurs de ce type d'engin ont presque tous une puissance nominale d'environ 200 Watts, soit l'équivalent de ce que peut donner le cycliste occasionnel à son maximum. Par contre, ils diffèrent par leur vitesse de rotation, leur courbe de couple, leur courbe de rendement, leur refroidissement, leur bruit, leur poids et leur prix.

Mais pour ce qui nous concerne, nous dirons qu'ils sont tous assez proches et partagent des qualités essentielles pour ce travail d'assistance. Ils démarrent seuls, offrent un couple important à l'arrêt et aux faibles régimes, tournent souvent lentement (certains sont même en prise direct), sont assez silencieux, vibrent peu, et possèdent un assez bon rendement pour peu qu'on ne les fasse pas tourner trop lentement.

Toutes ces qualités, disons le tout de suite, manquent cruellement aux moteurs thermiques.
- La cinématique du moteur d'assistance est un point de différence cruciale entre ces vélos.

Sur beaucoup de ces assistances, le moteur possède un braquet unique, ce qui signifie qu'il ne pourra délivrer sa puissance nominale qu'à une seule vitesse (souvent 25 km/h). La conséquence de cette disposition est que la puissance d'assistance chute avec la vitesse, ce qui est gênant par vent contraire et dramatique en montée. Ce problème se renforce par une chute du rendement (réduction de l'autonomie) et un moteur qui va rapidement chauffer, si bien que ces vélos sont inadaptés aux reliefs, même si la cinématique du cycliste offre plusieurs rapports.

Sur une autre famille d'assistance beaucoup plus évoluée, le moteur va bénéficier des changements de rapports du cycliste, si bien que le cycliste et le moteur pourront continuer leur bonne collaboration sur toute la plage de variation des rapports du vélo.
- la gestion de l'assistance est elle aussi de première importance. Pour répondre à certaines législations, le moteur ne doit pas fonctionner si le cycliste ne pédale pas, ce qui est d'ailleurs la définition d'une assistance. Dans les faits, certains vélos n'obéissent pas à cette règle, mais la faible puissance installée limite à très peu, les occasions où le vélo est utilisé sans pédaler.

Il est très tentant de penser que les assistances basées sur une mesure du couple exercé sur le pédalier, avec une réponse proportionnelle du moteur, sont le système le plus approprié. Une approche plus fine montre que le couple qu'exerce un cycliste sur son pédalier est sinusoïdal et sauf disposition spéciale la réponse du moteur sera elle aussi sinusoïdale sur un tour de pédale. Ce détail prive ces vélos d'un énorme avantage que peuvent offrir les assistances. En effet, si sur le plat l'inertie du vélo rend peu sensibles ces variations de couples, il n'en est pas de même en montée. Là, le vélo ralentit à chaque point mort du pédalier pour accélérer ensuite. C'est la raison pour laquelle notre vitesse moyenne de pédalage décroît en montée et c'est aussi la raison pour laquelle à puissance égale le pédalage en côte est plus éprouvant que sur le plat. Cette variation de couple est aussi très défavorable à l'adhérence, détail particulièrement sensible sur les vélos tout terrain qui ont des capacités très limitées sur ce plan.

Sans entrer dans les détails, une bonne gestion de l'assistance donne un couple constant sur un tour de pédale. Cela donne un fond de couple constant qui permet de passer facilement les points morts du pédalier, et cela « arrondit » considérablement le coup de pédale en montée ou au démarrage. L'effet va bien au delà de la puissance ajoutée, car il permet au cycliste de retrouver en côte un rendement de pédalage proche de celui du plat.
- Les batteries sont l'énorme point faible de ces engins malgré de récents progrès dans le domaine et la recherche fondamentale ne laisse pas espérer de stockage supérieur à 200 Wh/kg. Dans la réalité nous sommes bien loin de cela car le stockage d'énergie dépend d'un grand nombre de paramètre, la température, la puissance appelée, l'âge de la batterie, le nombre de recharges déjà effectuées, les durées de stockage et les modes de recharge. Dans la réalité, les meilleures batteries offrent une moyenne d'environ 100 wh/kg sur deux ans d'utilisation.

Si on fait l'analogie avec un carburant liquide, même en tenant compte de la différence de rendement entre moteur électrique et thermique, un kilo de batterie est au mieux équivalent à un réservoir de 50 cm3 que l'on devrait remplir au compte gouttes pendant sur au moins 4 heures, qui rétrécirait à chaque plein, qui fuirait lorsque l'on ne s'en sert pas, qui se crèverait généralement au bout de 3 ans, dont le pouvoir calorifique du carburant baisserait avec son niveau, et qui serait réalisé dans un métal très précieux non recyclable.

Cette analogie qui semble caricaturale, définit le challenge que doivent surmonter ces vélos.

Notons qu'un kilo de batterie lithium-ion coûte environ 200 Euros (2007) et qu'il stockera au mieux dans sa vie 500 x 100wh, soit 50kwh, soit environ 5 Euros d'énergie. Le prix du stockage est donc de 40 fois le prix de l'énergie stockée.

Ce détail apparaît dans toute sa cruauté, lorsque l'utilisateur doit changer sa batterie (en général après deux à trois saisons) et les enquêtes montrent que la vie du dit vélo s'arrête souvent là.

Tout cela fait que ces vélos embarquent avec eux une quantité d'énergie dérisoire, environ une heure à la puissance nominale. Dans certains pays des législations imposent à ces vélos des vitesses maximum (de 25 à 32 km/h), dans les faits, la plupart de ces assistances sont coupées dés 18 km/h pour économiser l'énergie et il ne s'agit alors que d'assistance au démarrage. Ce qui permet selon le protocole de mesure du constructeur d'annoncer des autonomies qui dépassent parfois 80 kms. En vérité, la majeure partie de cette distance s'effectuera avec une assistance nulle ou très faible. En montée, pour les vélos qui en sont capable, l'autonomie reste en général sous les 10kms.

Cela est vraiment regrettable, car certains de ces engins sont vraiment réussis, leur convivialité est telle, que l'on pourrait ignorer que l'on est sur un engin motorisé et seulement penser que l'on est dans une forme éblouissante. En ville ils permettent de faire une dizaine de kilomètre en pleine chaleur sans transpirer, et l'on hésite moins à freiner ou s'arrêter tant le démarrage est aisé, ce qui est tout au bénéfice de la sécurité. Nous dirons pour les meilleurs d'entre eux qu'ils sont formidable... pendant une heure. Ce qui représente une utilisation très restreinte, interdit toute randonnée, et limite beaucoup leur diffusion.

L'idée d'un vélo assisté à carburant liquide d'origine fossile ou végétale résout tous les problèmes de stockage d'énergie, par contre les moteurs thermiques courants ne possèdent aucunes des caractéristiques propres aux moteurs électriques.

Ils ne démarrent pas seul, ont un régime minimal de ralenti, disposent de peu de couple aux très bas régimes, ce couple est très variable sur le cycle du moteur, ils ont une plage d'utilisation restreinte, un rendement assez faible et variable selon charge et régime, ils chauffent beaucoup, vibrent, font beaucoup de bruits et peuvent être très polluants. Pourtant ils sont les seuls dont la technique est vraiment connue, dont la mise en oeuvre est facile et la réalisation économique. Et nous allons voir plus loin certaines dispositions qui permettent de résoudre ou atténuer la plupart de ces inconvénients. Ces dispositions vont permettre la conception d'un engin particulièrement agréable, au rendement global surprenant et d'une discrétion étonnante.

Vouloir se rapprocher de la convivialité d'un vélo à assistance électrique avec une assistance thermique n'est pas un objectif facile. Chaque élément devra répondre à de multiple contraintes (notamment fonction, poids, implantation, ergonomie, rendement, bruit, vibration, compatibilité avec la transmission vélo, prix) ces contraintes sont si importantes que certains éléments, seront par la suite décrit plusieurs fois à travers chacun de ces aspects.

### Etat de la technique :

Des milliers de brevets traitent de vélos équipés d'un moteur thermique, mais dans la plupart des cas, le moteur est destiné à se substituer au pédalage. La collaboration est impossible, ou possible seulement dans des circonstances très spécifiques, par exemple en montée à très faible vitesse ou au démarrage.

Beaucoup de conditions sont nécessaires pour qu'une collaboration permanente entre le cycliste et son assistance soit possible et il en faut encore beaucoup plus si nous souhaitons que cette collaboration soit, efficace et harmonieuse et de bon rendement.

La première est que les braquets respectifs du cycliste et de l'assistance soient compatibles sur toute la plage de vitesse du véhicule. Cette première condition limite le nombre de brevets pertinents à quelques dizaines. Il serait assez difficile de faire ici un résumé de la portée de ces brevets. Nous allons donc essayer de les citer dans la limite de nos connaissances au fur et à mesure de la description générale qui suit, lorsqu'ils nous semblent pertinents.

Sans entrer dans les détails assez complexes qui définissent le rendement physiologique du pédalage, nous pouvons dire que le rendement maximum d'un cycliste occasionnel (qui n'atteint pas 0.2), se situe aux environs de 60 à 70 tours de pédale par minute et sa puissance maximum continue aux environs de 80 à 90 trs/min.

Les transmissions modernes de vélo offrent un grand nombre de rapports et une grosse plage de variation qui peut dépasser 6, ce qui signifie qu'elles permettent à un cycliste de rester à son rendement maximum pour des vitesses allant par exemple de 7 à 42 km/h. Nous considèrerons qu'elles sont assez optimales, pour la plupart des conditions rencontrées. Le vélo en sera donc équipé.

Le rendement maximum des moteurs thermiques classiques dépasse assez facilement 0.25, il est donc supérieur au rendement humain, mais reste assez faible et cela conduit à un grand dégagement de chaleur qu'il convient de traiter correctement.

Ce rendement n'est maximum qu'à pleine charge et sur une plage de régime assez étroite et il s'effondre rapidement en dehors de ces conditions. Notons que le régime de rendement maximum, est toujours proche du régime de couple maximum.

La condition de pleine charge est assez facile à résoudre, il suffit qu'il n'y ait presque jamais de puissance en excédent, donc que la puissance installée soit très faible. Ce détail va dans le bon sens, car avec une puissance importante, l'apport du cycliste deviendrait très vite négligeable et superflu.

La condition de maintien sur la plage de régime de rendement maximal est plus délicate, elle exclue toute les cinématiques à braquet unique. Surtout qu'avec une puissance faible, la vitesse de l'engin sera extrêmement variable avec le vent ou les déclivités rencontrées. (Cette condition réduit considérablement le nombre de brevets pertinents)

La première solution possible pour résoudre ce problème est le variateur, centrifuge ou piloté, cette possible solution pose de délicats problèmes techniques dans son application au vélo assisté.

Une autre solution assez élégante est d'utiliser pour le moteur, le changement de vitesse du cycliste, ce qui est possible lorsque la puissance ajoutée est faible. Dans ce cas la vitesse de rotation du moteur est proportionnellement liée à celle du pédalage.

Il suffit alors de choisir le taux de réduction adéquat, pour qu'au régime de rendement maximum de pédalage du cycliste, corresponde en gros le régime de rendement maximum du moteur.

Nous voyons immédiatement qu'il serait aussi d'un grand intérêt que les régimes de puissance maximum correspondent eux aussi. Ce qui est possible si le moteur est défini pour avoir les mêmes ratios entre régimes de rendement maximum et régimes de puissance maximale que le cycliste, soit environ 65/85 = 0,76, ce qui est tout à fait possible.

Ainsi le cycliste va gérer ses vitesses comme il l'a toujours fait pour lui, tout en plaçant le moteur dans les meilleures dispositions pour effectuer son travail. Et comme l'homme est par nature particulièrement économe dans sa gestion de l'énergie, lorsque c'est lui qui la fournit, cela conduit à un système de gestion de l'assistance gratuit et particulièrement optimisé pour ce qui concerne l'aspect régime moteur, ce qui est capital avec un moteur thermique. Cette disposition accompagnée d'une faible puissance installée qui garantie de forte charge pour le moteur, mène à une installation qui sera la plupart du temps utilisée à son rendement optimum.

Pour indication, un vélo confortable (position très droite) équipé de gros pneumatiques peu gonflés pourra malgré tout dépasser 35 km/h, avec 400 Watts de puissance (avec la même puissance un vélo de course atteint 50 Km/h). Ces 400 Watts pourront être répartis à raison de 100 Watts pour le cycliste (très faible) et 300 Watts pour l'assistance. Pour fournir ces 300 Watts au vélo, nous allons supposer que le moteur doit fournir 360 Watts (un demi-cheval) pour compenser les pertes de transmission.

Les bons moteurs thermiques peuvent atteindre un rendement de 180 grs de carburant par cheval et par heure. Comme nous souhaitons un moteur simple qui ne sera pas toujours exactement à son rendement maximum, nous allons considérer qu'il va utiliser en moyenne 220 grs.ch.h soit 110 grs de carburant par heure pour notre moteur de 360 Watts.

Il faudra environ 3 heures à notre vélo pour effectuer 100 Kms, sa consommation sera donc de 330 grs de carburant, soit un peu moins de 0.5 litre s'il s'agit d'essence, soit la valeur étonnante de 12 grs de CO2/Km. (dans ce domaine les meilleurs cyclomoteurs ne descendent pas en dessous de 60 grs de CO2/km)

Notons que malgré des hypothèses systématiquement très défavorables, cette valeur n'est pas à la portée d'un vélo électrique, sauf si l'électricité est de source nucléaire ou renouvelable.

Cette idée n'est pas vraiment nouvelle puisque nous en trouvons des traces au début du siècle sur le brevet Français n°535 184, puis plus tard sur le brevet Français n°915 817, puis notamment sur les brevets US 3 280 932, GB 637 014, US 4 397 369, US 5 076 386, US 5 361 863, US 5 941 332, EP 0 822 136 A2. Et pourtant bien peu de réalisations ont utilisé cette technique très séduisante en théorie. US 5 941 332 A divulgue un dispositif selon le préambule de la revendication 1.

Une première invention concerne un dispositif d'assistance au pédalage pour engin léger, en particulier vélo, équipé de pédales et d'une transmission à changement de rapports, ce dispositif comportant un moteur thermique équipé d'un réducteur en couplage mécanique avec un élément recevant une puissance musculaire de pédalage d'un utilisateur de l'engin léger, le couplage mécanique s'effectuant en amont de ladite transmission à changement de rapports de manière à ce que le moteur thermique bénéficie desdits changements de rapports. Le réducteur du moteur thermique comporte un premier étage de réduction à courroie. L'invention concerne un dispositif d'assistance au pédalage pour engin léger, en particulier vélo, c'est-à-dire qu'il concerne un dispositif d'assistance destiné à être monté sur un engin léger pour aider un utilisateur à fournir un effort permettant de mouvoir l'engin léger. L'engin léger est équipé de pédales et d'une transmission à changement de rapports. Le dispositif d'assistance comporte un moteur thermique équipé d'un réducteur en couplage mécanique avec un élément recevant une puissance musculaire de pédalage de l'utilisateur de l'engin léger. Le couplage mécanique entre le réducteur et l'élément recevant la puissance musculaire de pédalage de l'utilisateur de l'engin léger s'effectue en amont de la transmission à changement de rapports de manière à ce que le moteur thermique bénéficie desdits changements de rapports. Le dispositif est **caractérisé en ce que** le réducteur du moteur thermique comporte un premier étage de réduction à courroie.

La première invention concerne aussi un engin léger, en particulier vélo, comprenant un dispositif d'assistance défini précédemment.

Un mode de réalisation concerne un dispositif d'assistance au pédalage pour engin léger, en particulier vélo, équipé de pédales et d'une transmission à changement de rapports, ce dispositif comportant un moteur thermique équipé d'un réducteur en couplage mécanique avec un élément recevant une puissance musculaire de pédalage d'un utilisateur de l'engin léger, le couplage mécanique s'effectuant en amont de ladite transmission à changement de rapports de manière à ce que le moteur thermique bénéficie desdits changements de rapports. Le dispositif d'assistance comporte un limiteur de couple placé sur la cinématique du réducteur du moteur thermique entre ledit moteur thermique et le couplage mécanique. Autrement dit, l'invention concerne une assistance au pédalage à moteur thermique, pour vélo équipé d'une transmission à plusieurs vitesses, comportant une jonction des deux sources de puissance située avant ladite transmission à plusieurs vitesses, l'assistance étant **caractérisée en ce qu**'elle comporte un limiteur de couple placé sur la cinématique du moteur entre le moteur et la jonction des deux sources de puissance.

Ce mode de réalisation concerne aussi un engin léger, en particulier vélo, comprenant un dispositif d'assistance défini précédemment.

Un autre mode de réalisation concerne un dispositif d'assistance au pédalage pour engin léger, en particulier vélo, le dispositif comprenant un moteur thermique et un servomoteur agissant sur la commande des gaz du moteur thermique.

Ce mode de réalisation concerne aussi un engin léger, en particulier vélo, comprenant un dispositif d'assistance défini précédemment.

L'invention concerne un dispositif d'assistance au pédalage défini par la revendication 1.

L'enveloppe peut être solidaire d'un carter du réducteur et est découplé mécaniquement du moteur thermique, de manière à moins vibrer.

L'enveloppe peut encapsuler un premier étage de réduction du réducteur.

L'enveloppe peut comprendre une paroi intérieure et une paroi extérieure entre lesquelles est constitué un ou plusieurs réservoirs pouvant contenir un liquide.

Le liquide peut être un liquide de refroidissement et échanger de la chaleur avec l'air ambiant via la paroi extérieure, la paroi extérieure étant éventuellement ondulée ou ailetée.

Un réservoir peut contenir un liquide de lubrification du moteur thermique.

L'enveloppe extérieure peut comprendre un orifice de remplissage fermé par un bouchon et être positionné de façon à ce que le réservoir contenant le liquide de lubrification puisse être vidangé par le même orifice par une inclinaison du dispositif.

Un réservoir peut contenir un carburant du moteur thermique.

L'enveloppe peut être constituée par un matériau à faible transmission sonore comme une mousse de matière plastique.

L'enveloppe peut comprendre une garniture en matériau isolant phonique, comme un feutre, notamment un feutre de laine ou une mousse à cellules ouvertes.

Le moteur peut être à refroidissement liquide et deux canalisations peuvent traverser l'enveloppe pour permettre au liquide d'entrer et sortir de l'enveloppe, un échangeur de chaleur connecté à ces canalisations étant disposé à l'extérieur de l'enveloppe.

Un lubrifiant peut constituer le liquide de refroidissement.

Un ventilateur électrique commandé par un thermo-contact peut générer un flux d'air sur l'échangeur de chaleur lorsque le refroidissement est insuffisant.

Le moteur peut être à refroidissement à air et une turbine peut aspirer et refouler de l'air dans l'enveloppe à travers deux canalisations d'entrée et de sortie d'air dirigées vers l'arrière ou les cotés du dispositif.

Une canalisation souple peut guider l'air chaud du moteur vers la canalisation de sortie de l'enveloppe, de manière à éviter des recirculations d'air chaud dans l'enveloppe.

Les canalisations d'entré et/ou de sortie d'air de l'enveloppe peuvent comprendre une structure alvéolaire à l'intérieur de laquelle transite l'air.

Le refroidissement du moteur peut être mixte air et liquide et une turbine peut aspirer et refouler de l'air dans l'enveloppe à travers deux canalisations d'entrée et de sortie d'air dirigées vers l'arrière ou les côtés du dispositif.

Une canalisation souple, placée entre l'aspiration ou le refoulement d'air de refroidissement et l'enveloppe, peut interdire les recirculations d'air chaud dans l'enveloppe.

Le dispositif peut comprendre une ou deux structures alvéolaires placées dans les canalisations d'entrée et/ou de sortie d'air de l'enveloppe, les structures alvéolaires étant des échangeurs de chaleur.

La canalisation d'entrée d'air ou la canalisation de sortie d'air peut être en communication avec une poutre creuse supportant le moteur, la poutre creuse présentant une ouverture à son extrémité postérieure.

Le moteur thermique peut comprendre un ou deux arbres d'équilibrage.

L'enveloppe peut comprendre un orifice d'entrée de gaz d'alimentation du moteur thermique, cet orifice étant en communication avec un support moteur creux, ce support définissant un volume d'admission d'air d'alimentation du moteur thermique.

Le moteur thermique peut comprendre un carburateur disposé à l'extérieur de l'enveloppe.

Le moteur thermique peut comprendre un pot d'échappement fixé sur un support du moteur thermique ou destiné à être fixé sur un tube de cadre du vélo recevant le tube de selle ou destiné à être fixé sur un hauban de cadre du vélo.

La transmission peut être du type à changement de rapports, le couplage mécanique s'effectuant en amont de ladite transmission à changement de rapports de manière à ce que le moteur bénéficie desdits changements de rapports.

L'invention concerne aussi un engin, en particulier vélo, comprenant un dispositif d'assistance défini précédemment.

Un autre mode de réalisation concerne un dispositif d'assistance au pédalage pour engin léger, en particulier vélo, équipé de pédales et d'une transmission à changement de rapports, ce dispositif comportant un moteur thermique équipé d'un embrayage centrifuge et d'un réducteur en couplage mécanique avec un élément recevant une puissance musculaire de pédalage d'un utilisateur de l'engin léger, le couplage mécanique s'effectuant en amont de ladite transmission à changement de rapports de manière à ce que le moteur thermique bénéficie desdits changements de rapports. Le moteur fournit au moins 80% de son couple maximum au régime de verrouillage de son embrayage.

Ce mode de réalisation concerne aussi un engin léger, en particulier vélo, comprenant un dispositif d'assistance défini précédemment.

Bien entendu, les modes de réalisation peuvent être combinées entre elles pour définir un dispositif d'assistance au pédalage particulièrement intéressant. A cet effet, sauf incompatibilité technologique, n'importe lequel des modes de réalisation d'un dispositif selon une invention peut être combiné à n'importe lequel des modes de réalisation d'un dispositif selon une autre invention. Un mode de réalisation combinant les différentes inventions est décrit plus bas en référence aux figures.

### Dispositions diminuant les contraintes sur la chaîne cinématique :

On peut légitimement se poser des questions sur la durée de vie d'une transmission de vélo, avec un apport supplémentaire de puissance.

Une transmission de vélo de bonne qualité peut supporter la puissance d'un sprint, qui peut atteindre 1000 Watts, soit prés de 2000 Watts en puissance instantanée. Ce sont ces variations de puissance instantanée qui éprouvent le plus la transmission. En première approche, à puissance égale, la puissance instantanée sera beaucoup plus constante sur un vélo assisté que sur un vélo classique. Si le fond d'assistance est constant et cela devrait conduire à une durée de vie plutôt meilleure de la transmission.

Dans la réalité, il n'en est rien, et certains phénomènes pourront même entraîner des ruptures de transmission, car cette technique comporte de sérieux écueils.

Le premier est que les moteurs à piston génèrent un couple variable sur leur cycle qui éprouve les transmissions, bien au delà de la puissance à transmettre.

Et si on ne filtre pas ces variations de couple avant leurs arrivées sur la transmission du vélo, la durée de vie de celle-ci sera très écourtée.

Le deuxième écueil porte sur les changements de rapports. Un des grands progrès des transmissions de vélo modernes est qu'elles permettent maintenant des changements de rapports en charge, ce qui va énormément simplifier la conduite de l'appareil.

Que le changement de rapports s'effectue avec des dérailleurs ou des moyeux épicycloïdaux, le passage d'un braquet vers un braquet plus petit se passera très bien.

Mais il en va tout autrement lorsque l'on passe d'un braquet vers un braquet plus grand. Dans ce cas, le moteur et sa transmission vont devoir subir une baisse instantanée de leurs régimes et la variation d'énergie cinétique va devoir transiter dans toute la transmission, jusqu'à la roue arrière. D'un point de vue ressenti, cela se traduit par un à-coup, qui sera d'autant plus violent, que l'on est sur un petit braquet.

Pour la transmission le choc est équivalent sur tous les braquets, il dépend surtout du taux de variation du changement de rapports et de l'inertie du moteur et de sa transmission. Lors de ce type de changement de rapports, c'est plusieurs fois la puissance nominale qui pourra transiter dans la transmission.

Nous voyons ici que sans dispositions spéciales, un alourdissement du volant moteur dans le but de régulariser le couple moteur, a un effet bien pervers sur la transmission.

Le phénomène est destructeur pour toute la chaîne cinématique, et même si l'on parvient à faire arriver ces puissances instantanées jusqu'à la transmission du vélo, alors c'est elle qui va souffrir avec dans le meilleur des cas une durée de vie très brève. Mais le plus souvent il faudra conjuguer avec des détériorations de pignons, des ruptures d'engrenages, ruptures de cliquets de changement de rapports, de chaînes, de roues libres, de rayons, des arrachements de valves par des pneumatiques qui tournent parfois sur leur jante.

Le pire cas de figure se rencontre avec les transmissions par moyeux épicycloïdal. Leurs engrenages offrent très peu d'amortissement, de plus ces transmissions offrent en général peu de rapports et un gros taux de variation entre chacun d'eux. Sur ce type de roue le moyeu est en général d'un gros diamètre, ce qui confère au rayonnage une bien plus grande rigidité. Cette caractéristique, habituellement recherchée, aggrave encore la situation vis à vis de ces chocs, car la roue très rigide amortie vraiment peu. Le tout conduit le plus souvent à des ruptures très rapides.

La situation avec une transmission à dérailleur est à peine meilleure, les chocs sont un peu moins violents, mais les chaînes sont plus étroites donc moins solides et les grands braquets s'obtiennent avec de tout petits pignons, dont les quelques dents en prises vont terriblement souffrir de la situation.

Par contre, le grand nombre de rapports va permettre de réduire l'écart entre deux braquets et cela sera particulièrement intéressant avec les petits pignons qui seront avantageusement espacés d'une seule dent.

La valeur de cette puissance instantanée va aussi dépendre de la rigidité du réducteur, la pire solution étant à base d'engrenages non amortis. L'élasticité de la réduction peut améliorer un peu la situation, mais il est difficile d'étaler l'excédant d'énergie cinétique sur une durée suffisante. Par ailleurs, une élasticité très forte conduit à une oscillation assez désagréable du régime moteur à chaque changement de rapports, voir à chaque coup de pédales, ces oscillations se produiront aussi en tous terrains au passage de chaque pierres ou irrégularités, ce qui est très gênant et génère de grandes variations de couple dans toute la chaîne cinématique. Ce cas de figure se rencontre très probablement dans le dispositif décrit sur le brevet US n°5 941 332.

Dans le dispositif selon l'invention un limiteur de couple permettra de dissiper correctement l'excédant d'énergie cinétique.

Notons que l'embrayage centrifuge dont sera équipé l'assistance devra coller au pire au environ de 50 trs/mn de régime pédale, et c'est à un régime beaucoup plus élevé que nous optons pour un braquet plus long. L'embrayage sera donc fermement verrouillé à ce moment et ne pourra pas remplir le rôle de limiteur de couple correctement.

D'un point de vue mécanique un convertisseur hydraulique serait d'une douceur assez idéal, mais le poids, le coût, et la perte de rendement, rendront son application difficile.

Un limiteur de couple mécanique à friction trouvera avantageusement sa place sur la cinématique d'assistance, entre le moteur et la jonction des deux sources de puissance. Ce limiteur de couple sera d'autant plus léger qu'il est proche du moteur, son efficacité sera d'autant meilleure qu'il est proche de la jonction, car il absorbera alors l'énergie cinétique de tout le réducteur. Malgré tout, la majeure partie de l'énergie cinétique provient du moteur et un limiteur placé sur celui-ci donnera déjà d'excellents résultats. Un bon compromis pourra être de le placer en sortie du premier étage de réduction, là ou le couple n'est pas encore très fort et l'implantation facile.

Le tarage de ce limiteur de couple lui permettra de transmettre au plus juste le couple maximum du moteur.

Les limiteurs à friction possèdent toujours un couple de déblocage supérieur à leur couple de recollage et une transmission légèrement souple améliorera encore le confort et l'efficacité de la solution.

Notons qu'il est possible de réaliser des limiteurs à base de cuir ou d'équivalents, comme garniture de friction. Ce matériau donne au limiteur des caractéristiques intermédiaires entre le visco-couplage et la friction sèche. Ainsi le limiteur aura souvent un léger glissement permanent, mais il offrira une grande douceur d'amortissement.

Ainsi équipées, les transmissions de vélos retrouvent non seulement leur fiabilité mais aussi une durée de vie comparable à celle d'un vélo classique. Cela est dû au fait qu'à puissance équivalente, les variations de puissance sur un tour de pédale sont beaucoup plus faible que sur un vélo classique, où la puissance instantanée peut atteindre le double de la puissance continue.

Nous verrons plus loin une version hydraulique de la transmission, où le moteur thermique entraîne une pompe qui alimente un moteur hydraulique lent. Cette solution ne dispense pas l'appareil d'un limiteur de couple, celui-ci pourra être mécanique comme précédemment décrit. Bien entendu le moteur hydraulique sera lent et ne nécessitera probablement pas de réduction, ce qui impose un limiteur de couple de forte capacité. Mais ce limiteur pourra aussi être une soupape de décharge.

### Bruits vibrations :

Ainsi équipé nous aurions un vélo au rendement exceptionnel sur tous types de terrains, mais qui ferait un bruit d'environ 90 décibels au niveau des oreilles de son utilisateur, même s'il est homologué comme un cyclomoteur Européen et émet, 79 db à 7,5 mètres et 30km/h. Ce niveau sonore, acceptable pour un cyclomoteur, va rapidement lasser l'utilisateur qui devient très exigeant dés qu'il pédale.

En effet, pour la plupart des individus l'action de pédaler est associée au vélo et un vélo ne fait pas de bruit.

En réalité, à 30 Km/h sur un vélo pur, le bruit est d'environ 60 db au niveau des oreilles, mais ce bruit tombe très vite avec la vitesse car les bruits sont essentiellement d'origine aérodynamique.

L'objectif de 60 db à 30 Km/h au niveau des oreilles sur notre vélo assisté, ou même mieux, est possible. Mais cela nécessite un important travail sur la plupart des sources de bruits du vélo.

Notons qu'à 100 Km/h, le bruit intérieur d'une berline de luxe est au mieux de 65db et que 60db au niveau des oreilles correspondent à environ 50db selon le protocole de mesure habituel d'homologation des véhicules.

Il est naturellement souhaitable que le vélo assisté soit aussi léger que possible, de manière à être performant, maniable et facilement transportable. Ce qui rend le challenge de très faibles émissions sonores, encore plus délicat à atteindre car la légèreté est une grande amie du bruit.

La condition minimale pour qu'un objectif d'émission sonore soit atteint est déjà qu'aucunes des sources de bruit n'excède la valeur visée et cette condition minimale n'est en général pas suffisante. Précisons que c'est le bruit aux oreilles de l'utilisateur qui nous importe.

La source de bruit la plus facile à traiter est l'échappement du véhicule. Les recettes sont connues et pour peu que l'on donne la longueur et le volume souhaitable à l'amortisseur sonore le résultat est relativement facile à obtenir avec les faibles puissances que nous visons. Seule l'implantation est problématique car il n'est pas question de détériorer l'ergonomie du vélo, ni de provoquer des risques de brûlures en usage courant. Il est quand même souhaitable de diriger les ondes sonores dans une direction peu pénalisante pour les oreilles. Nous donnerons plus loin des solutions d'implantations compatibles avec le volume souhaitable.

Les bruits graves d'admission sont déjà beaucoup plus problématiques à amortir. Un volume important et très rigide est nécessaire et celui-ci n'est pas forcément facile à trouver ou placer sur un vélo, surtout si l'on ne souhaite pas alourdir et le vélo et l'esthétique. Dans certains cas le volume de certaines parties du cadre pourra être utilisé. Nous verrons plus loin dans un mode de réalisation particulier, que cette boite à air peut être constituée par le ou les carters de réducteur du moteur.

Les vibrations et bruits mécaniques émis par le moteur et son réducteur posent des problèmes bien plus délicats lorsque l'on vise des niveaux sonores très bas.

Pour le moteur, les vibrations proviennent essentiellement de deux sources bien distinctes.

La première provient des variations de couple moteur sur le cycle thermodynamique, soit un tour pour un deux temps et deux tours pour un quatre temps. Il s'agit d'une vibration qui tend à faire osciller le moteur autour de son axe au rythme des explosions, nous les nommerons vibrations de cycle.

La deuxième provient du déséquilibre des inerties de certaines pièces en mouvement lors de la rotation du moteur, nous les nommerons vibrations mécaniques.

Ces vibrations génèrent non seulement du bruit, mais aussi une gêne mécanique pour le cycliste. Elles seront donc gênantes pour les oreilles, mais aussi pour tous les points de contacts du cycliste avec son vélo. Ces points sont dans leur ordre de sensibilité, les mains, les pieds et les fesses.

Il est donc souhaitable que ces vibrations soient aussi faibles que possible et que leur intensité soit décroissante de la selle vers le pédalier, puis le guidon.

Nous verrons plus loin qu'il est intéressant d'opérer la jonction des deux sources de puissance sur le pédalier. Il est donc très tentant de concevoir un bloc moto-réducteur incluant le pédalier, comme sur les brevets FR n° 915 817, US 6 213 236, EP 0 822 136 A2.

Mais cette solution va générer un maximum de vibration dans le pédalier, ce qui n'est déjà pas très favorable. Pour éviter que ces vibrations ne soient transmises à tout le cadre du vélo, il faudrait que le bloc moto-réducteur soit monté élastiquement sur le cadre comme sur le brevet EP 0 822 136 et que le cadre soit bien plus lourd que le bloc moto-réducteur, ce qui sera difficilement le cas. A défaut de cela c'est le cycliste qui servira de masse, ce que nous voulons justement éviter. Par ailleurs, cette élasticité devra être compatible avec les efforts de pédalages qui sont considérables, ce qui est aussi très défavorable. Enfin, toute élasticité du pédalier se traduira par une perte de rendement de pédalage ce qui est regrettable. Cette configuration est donc particulièrement défavorable pour atteindre nos objectifs.

Pour atténuer fortement les vibrations de cycle il faudrait que notre moteur dispose d'un grand nombre de cylindres et si possible plus de 4 en 4 temps ou plus de 2 en 2 temps, ce qui sera économiquement plus que difficile.

Notons quand même que certaines solutions en bi-cylindres présentent de nombreux avantages en termes d'équilibrage mécanique, tout en réduisant d'environ une moitié la valeur de la vibration de cycle, mais le prix sera sans doute rédhibitoire.

Cette vibration se conçoit comme une action réaction du carter du moteur vis à vis de l'équipage mobile. Elle est généralement maximale au ralenti, puisqu'à ce régime le moteur est tout proche de caler à chaque compression. Elle peut aussi être très forte si l'on demande une forte charge à très bas régime, on dit alors que le moteur cogne.

Lorsque le moteur est embrayé elle se propage selon deux modes, le carter moteur transmet au cadre du vélo ses oscillations, tandis que le vilebrequin propage ses variations de couple à travers toute la transmission jusqu'à la roue motrice.

C'est la raison pour laquelle un moteur thermique mono-cylindre exige une transmission beaucoup plus solide qu'un moteur électrique.

Dans notre cas cela ne se limite pas à un surpoids et un surcoût, mais cela se paye aussi en bruit et usure de la transmission vélo.

Il est donc particulièrement intéressant d'étaler ces vibrations. Ainsi la fixation et l'accouplement du moteur auront avantage à autoriser une légère rotation du moteur autour de son axe. De même, la transmission aura une élasticité capable d'écrêter ces variations cycliques de couple.

Pour des raisons de coût le moteur de l'engin pourra être un monocylindre très basique, dépourvu de tout artifice d'équilibrage autre que son vilebrequin, qui générera donc d'importantes vibrations mécaniques.

Pour limiter ces vibrations il faut réduire au maximum la masse des pièces générant les vibrations, ce qui est en général fait et alourdir autant que possible la masse des pièces fixes. Mais nos possibilités dans ce domaine sont extrêmement limitées, tout ajout de poids étant très pénalisant pour les qualités dynamiques de l'engin.

Nous avons donc particulièrement intérêt à filtrer ces vibrations.

Mais pour filtrer efficacement ces vibrations il faut que les éléments élastiques qui supportent le moteur soient fixés sur une masse importante.

Comme nous souhaitons qu'un minimum de vibrations parviennent jusqu'au cycliste c'est sur le ratio masse du vélo, masse vibrante, que nous allons devoir agir.

Une analyse vibratoire plus fine du vélo montre qu'il est impossible de considérer le vélo comme une masse ponctuelle et qu'il doit être assimilé à une somme de masses reliées élastiquement entre elles. Ce qui conduit la plupart de ces masses à avoir un rôle inertiel très faible au regard des vibrations que nous voulons traiter, ce qui est encore défavorable.

Notre marge de manoeuvre est donc faible. Une piste très efficace demeure, elle consiste en un accouplement ou une transmission primaire de puissance qui autorise les mouvements nécessaires à l'amortissement des vibrations du moteur. Cela permet de fixer rigidement le réducteur sur le cadre, ce qui améliore nettement le ratio masse de vélo, masses vibrantes. Ce ratio pourra encore être renforcé en déplaçant certains éléments du moteur vers le vélo, comme par exemple le système d'échappement, le carburateur, la bobine d'allumage, le réservoir d'huile, le réservoir de carburant, l'éventuel capot d'insonorisation.

Cet allégement, du moteur, le conduit à vibrer avec une plus grande amplitude, mais le phénomène peut être largement compensé par le gain d'efficacité des fixations élastiques si le ratio masse fixe, masse vibrante, devient suffisamment favorable. Et cela sera le cas, à moins d'utiliser un moteur particulièrement lourd et un cadre particulièrement léger (certain cadre pèse moins de 1Kg).

L'intérêt de cette technique est qu'elle permet un gain vibratoire, à masse égale.

Il existe un grand nombre de solutions d'accouplement capable de donner au moteur les degrés de liberté souhaitables pour rendre possible l'amortissement des vibrations. Mais ces solutions ont une masse non négligeable, elles entraînent parfois une baisse du rendement et ont un encombrement qui pose souvent de sérieux problèmes d'implantation que nous aborderons au chapitre implantation.

Curieusement, c'est précisément pour résoudre un problème d'implantation que nous trouvons une de ces solutions, dans le brevet US n°5 941 332. Dans ce brevet le moteur est longitudinal et placé derrière la selle, il transmet sa puissance au réducteur par un accouplement flexible à câble de torsion.

Cela, dans l'excellent but de ne pas détériorer l'ergonomie du vélo. Mais il est bien dommage que cette solution ne soit pas accompagnée d'éléments élastiques de fixation du moteur. Notons aussi qu'aucun accessoire n'a été transféré sur le cadre.

Cette disposition longitudinale simplifie grandement les problèmes d'implantations, nous la retrouvons d'ailleurs sur les brevets GB n° 381 310, EP n°0 822 136 A2, mais elle impose un renvoi d'angle.

Dans le brevet US n° 5 941 332 ce renvoi d'angle est une vis sans fin, cette solution est particulièrement silencieuse. Il est dommage qu'elle soit accompagnée d'autres engrenages, mais il ne semble pas que le bruit et les vibrations aient été une préoccupation. Par contre cette solution possède un rendement déplorable qui est dans ce cas encore aggravé par le rendement du coupleur flexible qui n'est pas bon non plus. Dans ce cas précis, il est probable que plus de la moitié de la puissance du moteur parte en chaleur avant d'arriver à la roue arrière. Par ailleurs cette transmission n'est pas réversible, ce qui bloquera la roue arrière en manoeuvre arrière. Enfin ce type de coupleur flexible pèse très lourd, surtout si l'on souhaite qu'il résiste aux pics de puissance des changements de rapports précédemment décrits et sa trop faible rigidité en torsion va sans doute générer les phénomènes oscillatoires précédemment décrits.

La solution de moteur à axe longitudinal simplifie énormément les problèmes d'implantation et permet le montage de toutes sortes de coupleurs, mais elle impose un renvoi d'angle qui sera très difficilement silencieux s'il est composé d'engrenages d'angles, par ailleurs la solution sera lourde et coûteuse. Ce qui enlève beaucoup de son intérêt.

Notons que si le renvoi d'angle ne peut être évité, il sera judicieux de ne pas l'employer sur le premier étage du réducteur, qui est le plus rapide et donc le plus bruyant.

Nous proposons plus loin un renvoi d'angle par courroie qui peut être léger économique et silencieux, mais cette solution éprouve beaucoup les dites courroies.

Une solution assez particulière revêt dans notre cas un assez grand nombre d'avantages, le premier étage du réducteur est le plus rapide et donc le plus délicat à insonoriser, le couple y est par ailleurs faible. Il est d'un grand intérêt de le réaliser à base de courroie et si cette courroie est crantée, le rendement sera en plus particulièrement bon. Mais ce genre de montage supporte très mal un entraxe, qui varierait au gré des vibrations du moteur.

Notons que ce genre de transmission supporte par contre assez bien de petits défauts de parallélisme des axes.

L'idée est donc d'interposer aussi prés que possible des poulies, une sorte de bielle élastique en torsion, entre l'axe secondaire et l'axe du moteur.

Ainsi l'entraxe est maintenu quasi constant et le moteur peut osciller autour de son axe et vibrer dans toutes les directions, en imposant à son axe un mouvement sur une sorte de cône.

Outre le degré de liberté autorisé, le système se renforce par l'apport de l'inertie gyroscopique du moteur.

Par ailleurs, il peut être intéressant de fixer rigidement le moteur sur la bielle et de laisser seulement la liberté en rotation de la bielle autour de l'axe secondaire. Ainsi, le moment d'inertie du moteur est accru sans que l'on ait eu à augmenter sa masse, ce qui est tout bénéfice pour les vibrations de cycles.

Enfin, on aura intérêt à placer la dite bielle dans l'axe d'une des directions dans lesquelles le moteur vibre le moins.

Le premier étage étant le plus bruyant, cette bielle pourra former un carter d'insonorisation qui sera conçu pour avoir une faible rigidité en torsion.

Cette solution est applicable à une version bloc moteur pédalier, à la condition de disposer d'un moteur suffisamment étroit pour ne pas détruire l'ergonomie du vélo. Mais cette solution sera malgré tout défavorable en termes de vibrations résiduelles transmises aux pédales et en termes d'émissions sonores, car le corps du cycliste ne peut alors faire écran au bruit.

D'un point de vue vibratoire et sonore, il est d'un grand intérêt de fixer le réducteur et donc indirectement le moteur sur la partie du cadre qui va recevoir le tube de selle et plus particulièrement entre ce tube et la roue arrière.

Cette solution permet d'éloigner le générateur de vibration des points névralgiques que sont le guidon et les pédales. Par ailleurs, la selle et son tube constituent d'excellents absorbeurs vibratoires. Dans ce domaine, les selles à base de gel de silicone offre un gain de premier ordre.

Cette disposition permet de placer le moteur derrière la selle et dans ce cas le corps du cycliste va offrir un écran phonique de grande qualité, totalement gratuit en coût et poids. D'autres avantages de cette disposition sont l'absence de dégagement thermique sur le cycliste et une amélioration du travail des suspensions, si le vélo en est équipé, par l'accroissement du moment d'inertie du cadre.

Cette solution impose d'emmener le mouvement assez loin du moteur vers le pédalier ou, vers la roue arrière voir brevet US 3 280 932.

Dans le cas ou le mouvement est transmis au pédalier, le réducteur comportera difficilement moins de trois étages. (Sauf solution du brevet US 5 076 386)

Une des meilleures solutions regroupant nos objectifs d'amortissement, souplesse, rendement, coût, légèreté, silence, maintenance, pour emmener le mouvement aussi loin du moteur est d'utiliser des courroies crantées.

Malheureusement, cela sera assez difficile pour le dernier étage pour des raisons d'encombrement, à moins que le moteur soit vraiment d'une très faible puissance. Pour ce dernier étage qui tourne fort lentement la chaîne est un bon compromis, surtout si elle est sous carter.

Par contre la courroie crantée regroupe tous les avantages pour le second étage ou pour les deuxième et troisième étages si le réducteur comporte quatre étages, ce qui peut être nécessaire si le moteur est très rapide.

Bien que ce ou ces étages intermédiaires soit plus lent et donc moins bruyant que le premier étage, il est d'un grand intérêt de les placer sous carter.

Une disposition adéquate peut permettre à ce carter de remplir de multiples fonctions, ainsi ce carter pourra servir de support moteur, insonorisant pour la transmission, de garde boue, porte bagage, support de pot d'échappement, et surtout de boite à air pour amortir les bruits d'admission du moteur. Et c'est bien sûr, sur ce carter que nous aurons intérêt à placer le maximum d'accessoires de manière à faciliter le travail des fixations élastiques de moteur. Ces fonctions multiples sont bien entendu tout au bénéfice de la masse totale du vélo.

En dehors des mouvements du moteur, le carter du moteur lui même est un générateur de sons et nous aurons bien du mal à les réduirent suffisamment, sans un capotage insonorisant.

D'une manière particulière la double enveloppe d'un moteur à refroidissement liquide est déjà un isolant phonique très efficace, très recommandé pour notre application. Cette disposition permet en outre un encapsulage complet du moteur, ce qui est un atout énorme. Mais il est possible que cette solution ne soit pas économiquement viable. Dans ce cas un refroidissement par circulation d'huile peut être une alternative intéressante.

Mais il est probable que le refroidissement soit simplement à air. Dans ce cas le capotage devra relever le challenge de laisser passer l'air et bloquer autant que possible les sons.

Par sa conception notre engin pourra évoluer à pleine puissance, à des vitesses très faibles et il n'est pas raisonnable de le refroidir par le flux d'air dût à la vitesse de l'appareil, sauf dans le cas d'un refroidissement liquide très largement dimensionné.

Dans sa version la plus simple, le refroidissement sera à air pulsé par une turbine entraînée directement par le moteur. Cela pénalise le rendement du moteur en toutes circonstances et il est préférable que ce prélèvement soit efficace. Pour cela il est important qu'il y ait le moins de recirculation possible entre l'entrée d'air froid et la sortie d'air chaud. Par ailleurs il est préférable que ces orifices soient dirigés vers l'arrière du véhicule de manière à ne pas émettre trop de bruit vers l'utilisateur. Nous verrons dans une solution préférée que la sortie d'air chaud peut se faire à travers une poutre de porte bagage lui même constitué par le support moteur. Cette disposition permettant de bien séparer les flux dans cette zone turbulente du vélo.

Dans le cas où le support moteur ne serait pas utilisé pour guider ce flux, il sera intéressant d'effectuer cette sortie d'air chaud à travers une canalisation longue de quelques centimètres, de manière à diriger de façon laminaire le flux d'air chaud loin de l'aspiration d'air frais. Tourner l'entrée d'air frais vers l'arrière du véhicule peut sembler très pénalisant pour le débit d'air, en réalité la pression dynamique de l'air aux vitesses usuelles d'un vélo est vraiment faible. Et il est de toute façon d'un grand intérêt de diriger au maximum les ondes sonores vers l'arrière du vélo.

Le carter qui guide l'air de refroidissement du ventilateur vers les partie chaudes du moteur sera déjà traité comme un atténuateur de bruit, mais il est difficile de ne pas fixer ce carter sur le moteur, celui-ci va donc vibrer et générer du bruit.

Le capotage anti-bruit, lui, sera donc préférentiellement non fixé sur le moteur et sera suffisamment loin du moteur pour que celui-ci ne le touche pas lors de ses mouvements. Sa masse ira dans ce cas renforcer la masse du vélo dans la filtration des vibrations.

C'est par les orifices d'entrée et sortie d'air de ce capotage que vont pouvoir s'échapper une grande fraction des ondes sonores du moteur, ce qui sera probablement la source majeure de bruit du vélo. Il est possible d'atténuer ce bruit avec une faible perte de charge, en plaçant dans ces orifices une structure à alvéoles longilignes. Une structure nid d'abeilles donnera d'excellent résultat pour un très faible coût et poids. La forme de la section des alvéoles importe peu, le passage peut même être délimité par des plaques parallèles de faible espacement. La surface et la longueur des sections de passage sont par contre de première importance. Un compromis sera trouvé entre perte de charge et amortissement sonore.

Cette structure peut être un échangeur de chaleur de premier ordre et elle pourra être constituée par les radiateurs de refroidissement liquide du moteur, si celui-ci en est équipé. Ce qui constitue une alternative à l'encapsulage complet du moteur dans le cas d'un refroidissement liquide.

Notons qu'il régnera une certaine chaleur sous ce capotage, quel que soit le mode de refroidissement. Cette chaleur aura un effet bénéfique pour les redémarrages du moteur, qui est souvent coupé sur ce concept. Par contre elle peut gêner le fonctionnement de certains accessoires, comme les bobines d'allumages et surtout le carburateur qui risque alors de vaporiser le carburant, ce qui est très néfaste pour le démarrage. D'où un second intérêt de placer ces accessoires sur le support moteur et si possible au frais.

Ce capotage sera avantageusement garni intérieurement d'un matériau d'amortissement sonore. Notons l'efficacité surprenante du feutre de laine pour les fréquences généralement rencontrées avec ces petits moteurs. Certaine partie du capot pourront avoir une fonction de réservoir de liquide. La masse du liquide va accroître l'inertie du capot. Et l'effet double enveloppe sera particulièrement insonorisant.

### Réducteur :

La réduction est un sujet important dans ce concept, pour bénéficier du changement de vitesse du vélo il faut opérer une jonction de deux sources de puissance qui fonctionnent à des régimes très différents. Celle-ci peut se faire quelque part entre le pédalier et la roue arrière, le domaine a été assez bien fouillé dans l'art antérieur.

Certaines dispositions permettent d'avoir un taux de réduction un peu plus faible voir brevets US 3 280 932, US 2 596 391, EP 0 822 136 A2, FR 535 184, US 2 331 976.

Un taux de réduction maximal est nécessaire si nous souhaitons faire une jonction sur le pédalier, ce qui n'est pas très favorable en termes de poids et coût. Par contre cette disposition laisse une grande liberté au constructeur sur le choix du type de changement de vitesses, qui pourra par exemple être épicycloïdal dans le moyeu de roue, plus classique à dérailleur, ou mixte. D'une manière générale cette architecture sera compatible avec la plupart des systèmes de changement de rapports, ce qui permet de créer une grande famille de vélo avec une seule et même assistance.

Par ailleurs ce choix laisse une grande liberté pour la conception des suspensions, ce qui n'est pas forcément le cas des autres solutions.

Ce réducteur devra avoir un bon rendement, être silencieux, si possible réversible (ce qui permet de rouler en arrière), être léger, économique et capable d'amortir les vibrations de cycle. Il va de plus devoir trouver sa place sur un vélo sans en détruire l'ergonomie. Notons qu'en sortie son couple pourra dépasser 10 Kgm.

Sa conception serait plus simple avec un moteur lent, mais les multiples compromis nécessaire à l'élaboration du vélo conduiront probablement à un régime de puissance maximum compris entre 6000 et 10 000 tr/mn. Ce qui impose un taux de réduction important.

Si l'on excepte le rendement, la plus mauvaise solution est l'engrenage qui sera lourd, coûteux, bruyant, n'amortira pas, à moins d'ajouter un amortisseur ce qui alourdi encore le bilan de la solution.

La grande difficulté de cette conception est que nous visons des niveaux sonore inédits pour des deux roues à moteur thermique. Les engrenages, même droits, conviennent habituellement très bien pour un cyclomoteur. Ici leur utilisation est sans doute possible mais avec des qualités de réalisations pas forcément envisageables.

Pour le premier étage, la solution la moins bruyante est la courroie plate multi V, mais elle supporte mal les variations instantanées de puissance due au changement de vitesses et il faut largement dimensionner. Ces courroies peuvent à la limite jouer le rôle de limiteur de couple avec une tension appropriée, mais le patinage génère un bruit difficile à traiter et il limite considérablement la durée de vie de la courroie. Par ailleurs le rendement est moins bon que celui des courroies crantées, surtout si l'on ajoute un tendeur, ce qui est difficile à éviter.

Certaines courroies trapézoïdales de toute petite section peuvent aussi s'enroulées sur des poulies de tout petit diamètre et peuvent être utilisées, elles sont en fait très proche des courroies plates multi V, qui sont aussi des courroies à contact oblique.

Nous trouvons une courroie crantée sur le brevet US 5 361 863 pour la transmission du mouvement sans réduction du moteur vers un embrayage centrifuge, dans le but de déplacer l'embrayage du moteur vers le réducteur et probablement gagner ainsi quelques centimètres de largeur. Pour une raison étrange (probablement pour garder une vitesse identique), il est bien décrit que la réduction provient des autres étages. Cette transmission ne semble donc pas être un premier étage de réducteur, mais un accouplement.

Les courroies crantées sont pleines d'avantages pour le réducteur, bruit plus faible que l'engrenage, coût, légèreté, absence d'entretien, résistance à l'abrasion, amortissement et rendement. Malgré tout, leur bruit n'est pas négligeable à haute vitesse, ce qui est surtout délicat avec le premier étage. Certaines dispositions sont donc de rigueur, si l'on vise un très faible niveau sonore.

Le bruit d'une courroie crantée dépend essentiellement de sa vitesse linéaire et du volume de dent. Nous aurons donc intérêt à ce que la poulie motrice soit aussi petite que possible, ce qui à réduction égale conduit aussi à un gain de poids. Le pas sera avantageusement inférieur ou égal à 5,08mm et la qualité de la courroie sera aussi bonne que possible, de manière à être aussi étroite que possible pour la puissance à transmettre. Certaines versions silencieuses seront bien venues.

Malgré cela, excepté avec un moteur très lent, le premier étage devient vite une des principales sources de bruits du vélo.

La première mesure est de placer cet étage sous carter, ce carter pourra avoir le rôle décrit au chapitre vibration. Ce carter pourra en plus se trouver sous le capot d'insonorisation moteur.

Dans la plupart des cas, surtout si le limiteur de couple est efficace, il sera possible d'utiliser un pas inférieur ou égal à 3, ce qui est d'une grande efficacité. Il sera aussi possible de creuser sur les poulies le fond de chaque dent, avec une rainure d'évacuation d'air. De même, il sera possible sans toucher au diamètre primitif, de supprimer un certain ratio de dents sur les grosses poulies, car celle-ci possèdent un grand nombre de dents en prises. Une autre disposition est de placer deux courroies étroites côte à côte, ou de pratiquer une saignée centrale, un peu plus profonde que les dents, sur le périmètre de la roue dentée. Toutes ces mesures diminuent la vitesse de l'air chassé et aspiré par les dents de courroie.

Notons que la grosse poulie de transmission primaire est un emplacement de choix pour le limiteur de couple. Par ailleurs, cet emplacement permet au limiteur de recevoir un couple déjà légèrement lissé par la souplesse du premier étage à courroie.

Notons aussi que cette transmission primaire sera un des éléments les plus excentrés par rapport au plan médian du vélo et il importe qu'elle ne gêne pas le cycliste dans ses mouvements. Nous verrons au chapitre implantation qu'elle pourra être placée à des endroits peu gênant, ou que le moteur pourra être déporté latéralement pour permettre un moindre dépassement de la transmission du plan médian.

Enfin, cette transmission primaire pourra être un renvoi d'angle à courroie.

La technique consiste en des galets judicieusement placés qui permettent à la courroie de se vriller et faire un angle droit. Cette disposition fatigue les courroies mais elle permet une disposition longitudinale du moteur, ce qui simplifie énormément l'implantation d'un moteur qui va devoir comporter de nombreux accessoires sur son arbre et qui sera donc difficilement étroit.

Cette solution est compatible avec les dispositions anti-vibrations précédemment décrites.

Le deuxième étage, est beaucoup plus lent et pose moins de problèmes de bruits. Bien que le couple soit plus fort, les courroies crantées regroupent toujours un grand nombre de qualités pour ce travail. Et dans la disposition préférée, elles permettent en plus un entre-axe important, ce qui facilite le transport du mouvement vers le pédalier qui est assez éloigné du moteur. Un pas de 5 ou 5,08 sera particulièrement silencieux pour ce travail. Cette courroie peut fonctionner à l'air libre, mais elle serait alors un peu plus bruyante et vulnérable aux projections d'eau, de boue ou de branchage en tout terrain, ce qui peut nuire au fonctionnement. Nous avons vu qu'il est d'un grand intérêt de placer cet étage sous un carter fermé et de se servir de ce carter pour beaucoup d'autres fonctions, dont la boite à air du moteur. Dans ce cas nous aurons intérêt à placer deux filtres à air, un grossier à l'entrée d'air du carter et un autre entre le moteur et le dit carter.

Parfois, il pourra être nécessaire d'utiliser un réducteur à 4 étages, dans ce cas le travail de troisième étage entrera avantageusement dans le même cadre.

Notons que dans le cas d'un bloc moto-réducteur-pédalier, la solution courroie crantée pour les étages intermédiaires présente moins d'avantages, l'entre axes important de la solution et la grande largeur augmente l'encombrement. Mais la souplesse, le silence, le coût, la légèreté et l'absence d'entretien, en font malgré tout une très bonne solution. Cette solution est encore meilleure lorsque le moteur aspire dans le carter de ces courroies, qui constitue vraiment un très bon amortisseur sonore.

Nous reviendrons sur le sujet au chapitre implantation et dans un mode de réalisation particulier.

Pour le dernier étage et surtout si nous transmettons la puissance sur le pédalier, le mouvement sera très lent aux environs de 100 tr/mn au régime maximum, et le couple sera donc très important.

A de si faible vitesse, la chaîne présente de nombreux avantages en termes d'encombrement latéral, poids, coût, résistance, taux de réduction possible, rendement et même amortissement. Par contre elle nécessite un système de réglage de sa tension, elle supporte assez mal l'abrasion, les intempéries, et doit être lubrifiée. Aux faibles vitesses en question elle peut être très silencieuse.

Un des plus gros avantage de la chaîne est qu'elle peut fonctionner sur des pignons de toute petite taille, dans certains cas il est possible de descendre jusqu'à 7 dents. Et si on allie cette caractéristique avec un petit pas et une couronne de la taille du plateau du vélo, le dernier étage pourra offrir un taux de réduction considérable qui peut largement dépasser 10. Ce qui pourra être très utile sur le projet, surtout pour la réalisation de versions économiques. Cette caractéristique a ses limites dans notre cas, car un taux de 10 signifie que le petit pignon tournera aux environs de 1000tr/mn et à ce régime son bruit ne sera pas négligeable.

Par ailleurs, les petits pignons ont un effet polygonal qui croît très vite avec la diminution du nombre de dents. Cet effet polygonal détruit le rendement habituellement bon des chaînes et la flexion de chaque maillon conduit à une usure rapide de la chaîne. Cet effet polygonal génère aussi des harmoniques dans la transmission qui vont éprouver la transmission du vélo et générer du bruit. Un compromis est donc nécessaire et il sera préférable d'avoir un petit pignon de plus de 9 dents si cela est possible. Dans tous les cas de figure, il est d'un grand intérêt d'étaler ces vibrations. Cela peut s'effectuer assez simplement avec une couronne en matière plastique et des évidements adéquats. La longévité des petits pignons pourra être accrûe par un tendeur sur le brin mou, qui augmente le nombre de dents en prises. Le brin mou ne travaillant jamais sur ce concept, ce tendeur pourra être automatique, par pression élastique.

Le choix de chaîne double ou triple permet de réduire le pas de la chaîne, ce qui autorise à réduction égale des pignons avec d'avantage de dents et cela est tout au bénéfice du rendement, de la longévité et du silence.

Notons l'existence d'une chaîne simple, spéciale karting, particulièrement bien adapté à notre cas avec un pas de 7,6mm, cette chaîne permet un gros taux de réduction et offre par sa grande largeur une résistance étonnante pour un poids très faible.

Un autre avantage de ce type de chaîne est qu'elle existe aussi en version étanche lubrifiée à vie, beaucoup plus résistante à l'abrasion. Ces qualités se paye par une légère baisse du rendement, et un surcoût.

Pour des raisons de longévité et sécurité, il sera intéressant de placer ces chaînes sous un carter de protection, si possible étanche et capable de contenir de l'huile.

Les chaînes sont donc intéressante d'un point de vue encombrement, coût et taux de réduction, mais elles ne sont pas sans défauts. Les solutions à base d'engrenages non plus.

Dans certains cas, lorsque l'implantation et la puissance le permettent, les courroies crantées pourront aussi se charger de la réduction finale. A de si faible régime elles sont particulièrement silencieuses, par contre leur faible résistance à l'arrachement et aux sauts de dents impose une grande largeur de courroie et un grand nombre de dents en prises. Le taux de réduction sera donc assez faible, ce qui reportera le problème de réduction sur les autres étages, qui seront alors sans doute au nombre de 3. A de si faible régime la courroie crantée devient même assez lourde au Watt transmis. Mais cette solution est propre, sans entretien, assez économique, très silencieuse, souple et présente moins de danger pour l'utilisateur. Leur utilisation n'est donc pas sans avantages.

Cette solution, pourra aussi remplacer la chaîne dans notre version préférée, lorsque le couple et l'implantation le permettent.

Nous verrons plus loin une version bloc moto-réducteur-pédalier, totalement à base de courroies crantées.

Dans le cas où on recherche une grande compacité d'un bloc moto-réducteur pédalier, il sera possible d'utiliser des engrenages de préférence à tailles obliques pour les derniers étages, qui sont les plus lents. Si le réducteur comporte 4 étages, le deuxième étage assez rapide pourra faire appel à un grand pignon en matière plastique de manière à diminuer le bruit.

Une autre solution est de donner un gros taux de réduction au premier étage à courroie de manière à beaucoup diminuer la vitesse dans les étages à engrenages, qui pourront alors être au nombre de 2. Cette solution peut être d'une grande compacité si la grande poulie nécessaire au premier étage est concentrique à l'axe de pédalier et placée du côté opposé à la transmission de vélo. Cette grande poulie transmettant son mouvement dans le carter de réducteur à engrenages par une entretoise qui tourne autour de l'axe de pédalier.

Malgré leur premier étage à courroie ces deux solutions offriront un moindre amortissement des vibrations de cycle, ce qui fatiguera d'avantage la transmission du vélo. Le montage d'un élément souple supplémentaire dans la chaîne cinématique sera fort indiqué.

Dans le cas où le changement de rapports s'effectue avec un moyeu épicycloïdal la chaîne pourra elle aussi être remplacée par une courroie crantée.

Le brevet US 3 280 932 traite d'une solution où la jonction de puissance s'effectue sur le moyeu épicycloïdal de la roue arrière. L'intérêt de cette jonction est qu'elle nécessite un taux de réduction plus faible, réalisable en deux étages seulement. Il est bien évident que la pertinence de cette solution peut être largement améliorée par toutes les dispositions décrites précédemment. De même qu'il pourrait être intéressant dans le cas d'une réalisation à suspension arrière, de placer l'arbre intermédiaire de réducteur dans l'axe de l'articulation du bras oscillant, de manière à pouvoir fixer le moteur au cadre et ainsi diminuer les masses suspendue.

Le réducteur peut aussi être hydraulique, dans ce cas le moteur entraîne une pompe, et un moteur hydraulique lent transmet le mouvement au pédalier ou à la roue comme sur le brevet US 3 280 932. De manière à être un peu plus léger le moteur hydraulique pourra éventuellement transmettre le mouvement à travers un étage de réduction mécanique. Le limiteur de couple pourra être une soupape de surpression. Cette solution séduisante qui simplifie énormément l'implantation sera probablement assez coûteuse et d'un rendement assez faible et pas forcément très silencieuse.

### Implantation :

Notre objectif n'étant pas de créer un cyclomoteur sur lequel on puisse éventuellement pédaler, mais bien de créer un vélo efficace à pédalage assisté, il serait assez mal venu que certains organes mécaniques détériorent l'ergonomie du vélo.

La difficulté essentielle provient de l'aire balayée par les pieds et les jambes du cycliste lors du pédalage, qui est considérable, nous la nommerons aire de pédalage. Cette aire de pédalage couvre presque la totalité de la surface d'un cadre traditionnel à tube horizontal, à l'exception d'une petite surface derrière la potence. En cas de grande pointure, les talons effleureront presque les haubans. Nous pouvons définir un volume balayé par les pieds et les jambes du cycliste lors du pédalage, nous le nommons volume de pédalage. Aucun élément ne doit se trouver dans ce volume. L'aire de pédalage est en fait la projection du volume de pédalage sur un plan vertical et longitudinal au vélo.

Pour une bonne ergonomie, il est essentiel que les jambes travaillent dans deux plans parallèles. Et comme il n'est pas aisé d'élargir le bassin de l'utilisateur, cela donne un écartement des manivelles par rapport au plan médian du cadre dont les valeurs doivent être contenues dans une fourchette très étroite, à moins d'accepter un pédalage traumatisant et inefficace.

Sans aller jusqu'à adapter cette valeur à la largeur du bassin comme le font certains professionnels, une valeur de 100 mm entre la face extérieure de la manivelle et le plan médian est considéré comme l'extrême limite du tolérable pour un organisme moyen.

Par ailleurs, de nombreux pays imposent un angle minimum de garde au sol des vélos, avec pédale en position basse, dans le but d'éviter le contact des pédales avec le sol en virage. Et il va de soi qu'un grand écartement des pédales impose de placer le pédalier plus haut et donc la selle aussi, ce qui conduit vite à une impossibilité de poser les pieds au sol à l'arrêt. Et ce détail n'est pas sans importance sur un vélo qui peut avoir une vocation urbaine.

Toujours pour des raisons d'ergonomie les manivelles modernes ne sont plus droites (perpendiculaire à l'axe de pédalier) mais obliques. Le but de cette obliquité est d'éviter le frottement de la cheville contre la face externe de la dite manivelle. Si on tient compte de cette obliquité et de l'épaisseur minimale de la pédale à sa fixation sur l'axe de pédalier, nous nous retrouvons au mieux à une distance de 65 mm du plan médian, ce qui laisse bien peu de place pour l'implantation d'une mécanique. Cette faible valeur, qui conduit à un déport de 100mm déjà mauvaise d'un point de vue ergonomie, n'est valable que pour le côté gauche.

Du côté transmission, le problème se renforce par ce que l'on nomme la ligne de chaîne. Si le vélo est équipé de roues standards, le pignon médian s'il s'agit d'une roue à 9 pignons, se trouve à 45 mm du plan médian et c'est à cette distance que doit être placé le plateau moyen d'un triple plateau. Cette distance est ce que l'on nomme ligne de chaîne, sa finalité est d'essayer de limiter l'obliquité de chaîne sur les pignons et plateaux opposés. Bien entendu, un double ou un simple plateau devront aussi être centrés sur cette ligne de chaîne.

Tout cela conduit à une distance d'environ 35mm entre la chaîne sur le petit plateau et le plan médian, distance à laquelle il faut encore retrancher quelques millimètres pour le passage du changement de plateaux.

Il serait par ailleurs particulièrement regrettable de ne pas respecter la ligne de chaîne sur un concept où la chaîne aura un travail supplémentaire à fournir.

Ces contraintes rendent l'implantation extrêmement ardue et d'autres vont encore s'ajouter à celles-ci. Nous voyons déjà que la place pour implanter un bloc moteur pédalier sera plus que comptée.

Notons de ce point de vue l'astucieuse conception des brevets GB 637 014 et US 2 596 391, qui ont permis de contenir le déport de pédales à des valeurs raisonnables, grâce à un ingénieux réducteur de pédalier et des manivelles qui sont ici droites. Mais ces réalisations ne comporte pas d'embrayage centrifuge, ni de refroidissement forcé, les plateaux multiples sont impossibles et le bruit n'est pas une préoccupation.

La ligne de chaîne pourra être un peu plus favorable dans le cas d'une transmission à moyeu épicycloïdal. Mais il serait regrettable de concevoir une assistance qui ne puisse fonctionner qu'avec ce type de changement de rapports.

A la condition de s'écarter des standards actuels, en matière de roues, il est possible de gagner quelques millimètres sur la ligne de chaîne, avec des roues plus larges au moyeu que les 135mm actuels. Ce gain, borné par les limites d'ergonomie précédemment décrites, serait malgré tout d'un grand avantage dans notre cas. En tout état de cause, une largeur de 150 ou 160mm doit être possible.

Sur les autres endroits de l'aire de pédalage la place est encore plus réduite, car il faut alors conjuguer avec les particularités morphologiques, genoux en X, gros mollets, chevilles saillantes, grosses cuisses, petit bassin.

Seul deux emplacements sont plus faciles, le moteur peut aisément trouver sa place entre la potence et le passage des genoux ou derrière la selle.

Le premier emplacement eut ses heures de gloire au début du siècle et après guerre. C'est l'emplacement qui offre l'implantation la plus facile que ce soit pour le moteur ou son réducteur, que le mouvement soit transmis vers le pédalier ou la roue arrière.

Par contre le moteur est aux premières loges, pour diffuser bruits, vibrations dans le guidon, chaleur et éventuellement odeurs vers l'utilisateur, et la facilité d'implantation se paye cher en désagréments d'utilisation.

La deuxième solution n'est pas sans inconvénients, le porte bagage sera amputé d'un certain volume, le moteur pourra gêner dans certaine postures extrêmes utilisées dans les très fortes descentes lorsque le cycliste recule ses fesses au delà de la selle, enfin l'utilisation d'un siège bébé sera problématique.

Une approche moto pourrait laisser craindre un trop fort rehaussement du centre de gravité. Dans les faits cela donne plutôt une certaine stabilité, à un véhicule qui à la base en manque cruellement.

Si l'implantation du moteur est assez aisé derrière la selle, la transmission du mouvement vers le pédalier n'est pas simple car elle doit cheminer dans l'aire de pédalage par des endroits où l'espace est des plus restreint. Par ailleurs, la probable présence de haubans va considérablement amplifier les difficultés pour le passage du mouvement.

Seul le brevet US 5 941 332, semble avoir contourné ces difficultés par l'utilisation d'un flexible et d'un moteur à axe longitudinal, mais avec les inconvénients déjà décrits.

Par contre, cette disposition arrière permet de placer un moteur d'assez grandes dimensions sans gêne particulière en usage courant. Elle éloigne le générateur de vibrations du guidon et des pédales et supprime toutes nuisances thermiques. Elle permet aussi de disposer le moteur avec un axe transversal, avec les avantages déjà vus.

Mais surtout, à technologies identiques, le moteur derrière la selle donne un avantage considérable par rapport aux autres solutions en matière de bruit.

Cette solution peut s'accompagner d'un cadre de vélo très classique dans sa conformation, ce qui n'est pas le cas d'une réalisation à base de moto-réducteur à pédalier.

Pour décrire les difficultés à surmonter, nous allons commencer par l'arrivé de puissance moteur au pédalier.

Il est tentant de faire arriver cette puissance du côté de la transmission du vélo. C'est d'ailleurs ce qu'ont fait les prédécesseurs connus brevets US 4 397 369, US 5 076 386, US 5 361 863.

Cette solution est périlleuse à plus d'un titre, tout d'abord nous avons vu que la ligne de chaîne laisse fort peu de place disponible vers le cadre, elle en laisse encore moins lorsqu'on considère la présence des bases du vélo. En règle générale les bases reçoivent ce que l'on appelle le coup d'enclume, qui est une déformation de la base côté transmission pour laisser le grand plateau prendre sa place sans toucher la dite base. Cela laisse bien peu de place pour la transmission du mouvement si on souhaite respecter la ligne de chaîne et placer les deux roues libres nécessaires au passage automatique de vélo assisté à vélo classique, tout en permettant un pédalage arrière facile.

L'arrivée de puissance par le côté opposé de la transmission vélo oblige la présence d'une entretoise tournante à l'intérieur du boîtier de pédalier, cette entretoise tournante trouvera difficilement sa place dans un boîtier standard BSA, mais un boîtier un peu plus gros standard USA peut convenir. L'axe de pédalier pourra avoir une rotation à l'intérieur de cette entretoise tournante, par exemple lorsque l'on souhaite pédaler en arrière, mais il entraînera l'entretoise en pédalage avant grâce à une roue libre. C'est d'ailleurs là que s'opère la jonction entre les deux sources de puissance.

Cette disposition autorise le montage d'une couronne de même diamètre que le grand plateau sans aucun inconvénient, le diamètre pourra même être plus grand si l'on accepte une baisse de garde au sol. Une roue libre sera placée entre cette couronne et l'entretoise tournante de manière à ce que le pédalage puisse se faire moteur arrêté sans entraîner le réducteur. Par ailleurs la place disponible entre la pédale et la base pourra, dans certains cas, autoriser une transmission par courroie crantée. Cette solution laisse le côté transmission vélo intact, ce qui permet entre autres l'utilisation de plateaux multiples.

Pour l'étage suivant qui sera avantageusement à courroie crantée deux solutions sont possibles, le mouvement peut transiter dans l'axe du vélo devant ou derrière le tube support de selle ou sur le côté de ce tube et suffisamment décalé pour ne pas toucher le pneumatique.

Placer cet étage derrière le tube de selle impose un allongement des bases, de manière à laisser suffisamment de place pour l'étage de réducteur entre le tube de selle et la roue. Mais cette disposition est presque nécessaire sur ce type d'engin qui va posséder des capacités de franchissement vraiment surprenantes. Et sans un allongement de l'empattement il sera bien difficile au cycliste de conserver sa roue avant sur le sol. L'extrémité haute de ce deuxième étage pourra être placée de manière à permettre l'arrivée du premier étage hors de l'aire de pédalage, ce qui est d'un grand intérêt si le moteur est large. Avec cette solution le mouvement transitera en général entre les haubans, si le vélo en est équipé, à moins que ceux-ci soient implantés particulièrement bas.

Il est aussi possible de placer le deuxième étage devant le tube de selle, mais cela impose une arrivée de puissance du premier étage dans l'aire de pédalage. Cette solution imposera souvent un moteur désaxé, de manière à ce que la transmission primaire frôle le tube de selle et les éventuels haubans. Des haubans en Y inversé seront particulièrement indiqués pour laisser passer le mouvement sans trop écarter la transmission primaire du plan médian.

La deuxième solution avec un deuxième étage sur le côté du tube de selle, permet un empattement plus standard, mais elle est limitée en largeur de courroie possible. La situation sera encore plus critique si elle doit aussi éviter le pneumatique arrière qui peut être d'une grande largeur que le tube de selle.

D'une manière générale, la transmission primaire qui est un des organes le plus excentré du plan médian dirigera le mouvement vers le pédalier et donc en direction de l'aire de pédalage. A défaut de disposer d'un moteur particulièrement étroit capable de trouver sa place dans l'aire de pédalage, un moteur décentré pourra permettre à la sortie de la transmission primaire d'entrer dans l'aire de pédalage. Cette disposition permet de placer le moteur juste en bordure de l'aire de pédalage, ce qui peut présenter certains avantages au niveau de l'implantation, notamment une plus grande compacité.

De manière à limiter le dépassement de la transmission primaire du plan médian, lorsque l'embrayage centrifuge se trouve sur le moteur, il sera possible de déplacer l'embrayage à l'extérieur de la petite poulie de la transmission primaire. Dans cette disposition le palier de la cloche d'embrayage est constitué par la poulie elle même. Ce montage permet de gagner plus de 20 mm sur le déport, ce qui peut être d'un grand secours si la transmission doit entrer dans l'aire de pédalage.

Nous traiterons plus loin dans deux modes de réalisation particuliers, le cas du bloc moteur pédalier.

Dans tous les cas de figure, l'implantation du ou des pots d'échappements sera problématique à moins d'accepter un niveau sonore très fort.

Sur un vélo sans suspension arrière, le ou les pots d'échappement pourront trouver une place non gênante le long des haubans. Cet emplacement les place en dehors de l'aire de pédalage et dirige le bruit et la chaleur vers l'arrière du véhicule, ce qui est idéal.

Sur un vélo à suspension arrière le problème est encore plus délicat, sauf si l'on adopte le moteur en position arrière. Dans ce cas le ou les pots d'échappements trouveront leur place sur le support moteur derrière la selle au dessus de la roue arrière, ils pourront même constituer le porte bagage à la condition d'être recouverts d'une protection thermique.

Cette disposition derrière le tube de selle demeurera intéressante avec un bloc moteur pédalier, mais alors le pot d'échappement sera directement fixé sur le tube support de tube de selle et il occupera en gros la même position que le support moteur de notre réalisation préférée et il pourra avoir la fonction de garde boue et même de porte bagage avec une isolation adéquate.

### Gestion de l'assistance :

Dans sa version la plus simple, l'utilisateur gère par une commande de gaz le couple moteur et donc la valeur de l'assistance qu'il désire. Cette valeur ne va pas changer aussi souvent que la puissance appelée sur un cyclomoteur et une commande par poignée tournante avec retour automatique au ralenti n'est pas très indiquée. Une commande par levier, disposée de manière à pouvoir être commandée les mains sur le guidon, stable sur la position demandé est nettement plus agréable. Cette gestion n'est pas automatique et elle nécessite de couper les gaz lorsque on souhaite s'arrêter. Toutefois la faible puissance installée autorise un freinage d'urgence sans couper les gaz. L'erreur d'utilisation la plus gênante advient si on arrête le moteur plein gaz et qu'on le redémarre à l'arrêt en oubliant de remettre les gaz sur la position ralenti. Dans ce cas le vélo voudra avancer alors que ce n'est pas encore notre souhait. Le problème ne sera vraiment gênant que si on se trouve sur un petit braquet, là la force motrice du vélo pourra être difficile à contrer.

Cette mauvaise utilisation pourra être rendue impossible, si le coupe contact ne peut être actionné que lorsque que les gaz sont coupés, ou si le coupe contact s'actionne par un déplacement forcé de la manette de gaz au delà de la position ralenti.

De la même manière, la manette de gaz pourra être couplée au freinage, une action sur un ou les deux freins provoquant le retour sur la position ralenti. Ce qui peut se faire très facilement si le dispositif de freinage et la manette de gaz sont couplés mécaniquement ou hydrauliquement.

Ainsi équipé, le vélo n'est pas réellement assisté puisqu'on peut l'utiliser sur le moteur seul. Mais en réalité, l'arrêt du pédalage impose presque toujours de rétrograder un ou plusieurs rapports et la différence de performance avec et sans pédalage est telle que le vélo sera vraiment rarement utilisé sur le moteur seul.

Selon un mode plus sophistiqué, l'assistance est équipée d'une commande de gaz, d'un servomoteur et d'un détecteur de rotation des pédales. L'utilisateur gère toujours la commande de gaz qui définit le couple d'assistance, mais cette commande n'est rendue active que si le détecteur de rotation des pédales donne l'ordre au servomoteur de rendre la commande de gaz active. Le détecteur de rotation pourra faire le distinguo entre les deux sens de rotation, une rotation arrière étant assimilée à un arrêt de pédalage. Un contact supplémentaire ou une disposition mécanique pourront permettre un passage en mode manuel, mode plus efficace dans certaines utilisations, comme par exemple la pratique de tous terrains. Notons que le servomoteur fonctionne en tout ou rien et pour effectuer son travail il pourra par exemple agir sur la gaine du câble de gaz, en allongeant celle-ci il rend la commande de gaz active. Il pourra aussi faire partie de la manette de gaz.

Selon un mode de gestion encore plus sophistiqué le vélo est équipé d'un dispositif de contrôle du couple sur les pédales, d'un détecteur de rotation, d'un servomoteur de commande des gaz et d'une unité de contrôle des informations. De nombreux dispositifs permettent la mesure du couple sur les pédales, mais il peut être plus simple de contrôler les variations d'efforts qu'exerce le boîtier de pédalier sur le cadre.

A l'arrêt, la mesure du couple pourra se faire sur n'importe quelle position angulaire des manivelles, mais l'ordre d'accélération ne sera donné au servomoteur que lorsque qu'une rotation significative aura été enregistrée. Par la suite, la mesure du couple se fera deux fois par tour de pédale sur deux positions angulaires précises et l'assistance sera constante entre deux mesures tant que les manivelles tournent. Les gaz étant instantanément coupé si les pédales s'arrêtent ou inverse leur sens de rotation. Sur une gestion encore plus fine, la mesure s'effectue toujours sur deux positions angulaires précises, mais des mesures sur tout le tour de pédale sont effectuées et enregistrées, le tour de pédale suivant, le couple moteur pourra être modifié si une des valeurs varie de manière significative par rapport au tour précédent. Bien entendu la nouvelle mémorisation remplacera l'ancienne. La centrale de commande pourra aussi recevoir d'autres informations, tel que freinage, commutateur de sélection de différents modes d'assistance, régime moteur, température moteur, indication de changement de rapports, accéléromètre et inclinomètre.

En sortie, la centrale pourra :
Informer le conducteur si le moteur tourne, ce qui est fort utile dans certaines circonstances (en ville le bruit ambiant cache le bruit du moteur au ralenti, même chose en descente).
Couper l'assistance en cas de freinage, même si un couple et une rotation sont détectés.
Donner des indications de changement de rapports, ou même gérer les changements de rapports.
Réduire les gaz lorsqu'un changement de rapport vers un braquet plus grand est détecté.
Indiquer la puissance instantanée ou moyenne fournie par le cycliste.
Limiter l'assistance lorsque le moteur est froid ou trop chaud.
Informer du nombre d'heure de fonctionnement du moteur, dans le but de faciliter la maintenance.
Informer le cycliste sur sa cadence moyenne de pédalage.
Limiter la vitesse maximum.
Arrêter le moteur lorsque qu'une chute est présumée.

La centrale pourra faire un diagnostic fin des cadences de pédalage de l'utilisateur, dans le but de personnaliser le taux de réduction du réducteur, pour des types de pédalage particulier (très rapide ou très lent).

### Le moteur :

Commençons ce chapitre par une hypothèse de moteurs à combustion externe, qu'ils soient à vapeur ou Stirling, ces moteurs peuvent présenter de nombreux avantages pour notre application. Certains sont auto-démarrant et possèdent un fort couple au démarrage. Leurs rendements peuvent être très bon, surtout pour le Stirling, ils sont poly-carburants, leur combustion continue est très propre, ils tournent souvent lentement, sont très silencieux et vibrent très peu pour certains modèles (Stirling rombonique, Stirling en V à 90°, machine à vapeur lente). Certaines chaudières pour la vapeur sont à chauffe presque instantanée. Malheureusement leurs techniques ne sont pas ou plus très bien maîtrisées, si bien que leurs applications seront difficiles, ce qui est sans doute fort dommage.

Les moteurs à combustion interne ne peuvent démarrer seul, il n'est donc pas raisonnable de les arrêter à chaque arrêt du vélo. Par ailleurs, ils ne peuvent fournir pas fournir de puissance significative à leur régime de ralenti. Un embrayage centrifuge ou un convertisseur de couple (faible en rendement) leur permettra d'atteindre un régime suffisant pour offrir une puissance raisonnable. Il serait même souhaitable que le moteur puisse supporter sa pleine charge, pendant le patinage de l'embrayage ou du visco-coupleur.

Il est possible qu'un utilisateur souhaite pédaler très lentement en continu. Dans cette hypothèse une cadence de 50 tours/mn est possible. Par contre il est difficilement envisageable que l'embrayage centrifuge patine en permanence. Cet embrayage devra donc coller au plus tard, vers 45 trs/mn de pédalage. Pour être assez universelle notre assistance devra pouvoir accompagner le cycliste jusqu'à au moins 90 trs/mn.

Cela signifie que le moteur devra avoir une plage d'utilisation d'au moins 50% de son régime maximum, ce qui est assez important pour un monocylindre.

A cette contrainte, il faut en ajouter une autre plus délicate à obtenir, celle d'avoir un couple décroissant sur toute la plage de pédalage. Cela signifie que le couple du moteur doit être maximal lorsque l'embrayage colle et bien entendu ce couple ne doit pas s'effondrer trop vite pour pouvoir accompagner le cycliste jusqu'à un régime de pédalage élevé.

Sans cette condition, la collaboration entre assistance et cycliste ne sera pas harmonieuse.

A titre d'exemple, en côte il sera particulièrement désagréable d'avoir à fournir un effort d'accélération pour atteindre une cadence de pédalage où l'assistance aura la valeur souhaitée. De même lorsque l'on aborde une pente, l'assistance va s'effondrer avec la vitesse, ce qui va faire ressentir la variation de pente encore plus difficile qu'elle n'est. Cela qui obligera souvent à rétrograder plusieurs rapports, puis le régime de couple retrouvé, nous serons probablement en sur-assistance. Cela conduit assez vite à un régime instable, assez vite pénible. Et dans cette situation il s'agira d'avantage de motorisation assisté par pédalage que du contraire.

Alors qu'avec une courbe d'assistance décroissante avec le régime de pédalage, l'assistance se renforce lorsque le régime de pédalage décroît, ce qui aplanit les difficultés, diminue le nombre de changements de rapports nécessaires et facilite la conduite.

En fait le cycliste va réagir comme un banc de puissance extrêmement sensible et la moindre inflexion de couple sera ressentie.

Pour illustrer un peu ce passage, si on néglige le bruit, un moteur ayant par exemple une puissance maximale de 400 Watt à 8000trs/mn, un régime maximal de 9000trs/mn, avec un couple maximal à 4500trs/mn ,un rendement maximal à 6000trs/mn, et un ralenti à 3000trs/mn, serait assez idéal s'il est couplé à un réducteur d'environ 100/1 et un embrayage qui colle à 4500trs/mn.

Notons qu'un tel moteur pourrait avoir une cylindré de moins de 10 Cm3, il serait donc particulièrement léger et compact, mais son insonorisation et celle du réducteur seraient particulièrement difficile à obtenir à de si haut régime, pour les niveaux souhaitables.

Un moteur ayant sa puissance maximum à 4000trs/mn, un régime maximum de 4500trs/mn, un couple maximum à 2250trs/mn, un rendement maximal à 3000trs/mn et un ralenti à 1500trs/mn, serait lui aussi assez idéal avec un réducteur de 50/1 et beaucoup plus facile à rendre silencieux.

Il serait par contre de bien plus grosse cylindrée, plus lourd et encombrant. Mais un ralenti fiable à un régime aussi faible sera difficile à obtenir sur un moteur que l'on souhaite léger. De même il sera bien difficile d'éviter les cognements au régime de couple maximum qui est vraiment très faible, à moins de l'équiper d'un volant d'une taille très importante, ce qui alourdira encore beaucoup la solution.

Nous voyons donc que le moteur aura probablement une puissance maximale au environ de 6000trs/mn qui nécessitera une réduction d'environ 75/1 ce qui est considérable et pas à la portée de toutes les solutions techniques.

Bien sûr il est possible d'accepter un couple qui croît de quelques % après le collage de l'embrayage, mais cela se traduira par un désagrément d'utilisation qui sera d'autant plus grand que la variation est forte.

On pourra aussi utiliser cette caractéristique pour favoriser les régimes de pédalage moyens, ce qui sera tout au bénéfice de la sécurité et tout à fait dans l'esprit du produit.

Les moteurs deux temps auront beaucoup de mal à remplir ces conditions sans artifices coûteux, par ailleurs leurs émissions polluantes et leur rendement ne peuvent être bon sans d'autres artifices, coûteux eux aussi. Ces moteurs nécessitent un mélange d'huile et d'essence très contraignant ou une pompe à huile elle aussi coûteuse. Et même si aucune réglementation n'impose de dépolluer le moteur, les moteurs deux temps fument, ce qui sera très gênant si on roule en groupe. Par ailleurs, les turbulences aérodynamiques nous renvoient toujours de la fumée odorante sur les vêtements, qui vont s'en imprégner, ce qui est aussi un désagrément important. Si bien que leur utilisation sera difficile ou peu indiquée.

Cela est bien dommage car ces moteurs sont compacts, très légers, génèrent moins de vibrations de cycle, et moins de bruits mécaniques que les moteurs quatre temps.

Les caractéristiques que nous souhaitons sont par contre assez faciles à obtenir avec un moteur quatre temps, surtout si on ne souhaite pas de grosse puissance spécifique, ce qui est le cas.

Sur cette application particulière, le bruit et les vibrations sont des inconvénients de premier ordre. Par ailleurs, à moins d'avoir un axe longitudinal, la largeur du moteur posera de gros problèmes d'implantation. De nombreux accessoires devront être entraînés par le moteur. Dans le pire des cas, le moteur devra entraîner un volant d'inertie, un dispositif d'allumage, un ventilateur, sa distribution, une pompe à huile, une pompe à eau, un limiteur de couple, un embrayage centrifuge, une sortie de puissance, un dispositif de démarrage, un générateur de courant électrique et il sera bien difficile de réaliser un moteur étroit si tous ces accessoires se trouvent sur l'arbre moteur. Il sera donc d'un grand intérêt de répartir ces accessoires sur d'autres arbres. Nous avons déjà vu que le limiteur de couple pourra se trouver sur un arbre du réducteur, de même que l'embrayage mais avec certains inconvénients. Bien sûr, si le moteur est un quatre temps l'arbre à cames pourra être utilisé notamment pour la pompe à eau. Le mouvement est déjà réducté et il serait très séduisant d'utiliser cet arbre comme sortie de puissance. Nous trouvons déjà trace de cette technique sur le brevet FR 535 184. Dans les faits, cette possible solution pose autant de problèmes qu'elle en résout et son choix n'est pas évident.

Dans notre cas l'ajout d'un ou plusieurs arbres entraînés par le moteur peut être d'un grand secours pour l'entraînement d'accessoires.

Par ailleurs le traitement des vibrations revêt sur notre appareil une importance particulière, il serait donc d'un grand intérêt d'équiper notre moteur d'arbres d'équilibrage et nous voyons immédiatement que le ou les éventuels arbres d'équilibrage pourront en plus avoir une fonction d'entraînement de certains accessoires.

D'un point de vu économique, il est difficile d'imaginer un moteur autre que monocylindre pour notre application. Notons tout de même l'intérêt évident d'un point de vu vibration et régularité cyclique, des moteurs bi-cylindres à plat calé à 180° ou dans une moindre mesure bi-cylindre en V à 90°.

L'idéal serait un moteur bi-cylindre à plat calé à 180° avec ses deux cylindres dans le même axe, ce qui pose de sérieux problèmes de conception d'embiellage.

Notons à ce chapitre, qu'une très mauvaise utilisation est toujours possible (sauf dans le cas de changements de vitesse gérés par la centrale électronique). Ainsi une personne non initiée pourrait attaquer une pente sur un très gros braquet, avec une cadence de pédale trop faible pour que l'embrayage colle, ce qui conduirait au bout d'un certain temps à une surchauffe et même une détérioration de l'élément. Conséquence qui peut être évitée par un thermo-contact placé à proximité de l'embrayage, capable d'arrêter le moteur dans cette situation.

D'autres avantages et caractéristiques de l'invention ressortiront plus clairement des dessins annexés, donnés à titre d'exemples non limitatif dans lesquels :
La figure 1 représente une vue en perspective de gauche du premier mode de réalisation d'un vélo.
La figure 2 représente une vue en perspective de droite du premier mode de réalisation d'un vélo.
La figure 3 représente une vue en perspective des deux premiers étages de réduction d'un premier mode de réalisation d'un dispositif d'assistance au pédalage.
La figure 4 représente une vue en coupe d'un limiteur de couple.
La figure 5 représente une vue en coupe d'un boîtier de pédalier.
La figure 6 représente une vue en perspective de droite du pédalier.
La figure 7 représente une vue en perspective de gauche d'un carter de réduction.
La figure 8 représente une vue en perspective de droite d'un deuxième mode de réalisation d'un dispositif d'assistance au pédalage.
La figure 9 représente une vue en perspective de la cinématique du deuxième mode de réalisation.
La figure 10 représente une vue en perspective en coupe du deuxième mode de réalisation.
La figure 11 représente une vue en coupe de dessus du deuxième mode de réalisation.
La figure 12 représente une vue en perspective de la cinématique d'un troisième mode de réalisation d'un dispositif d'assistance au pédalage selon l'invention.
La figure 13 représente une vue en coupe de dessus de la cinématique du troisième mode de réalisation.

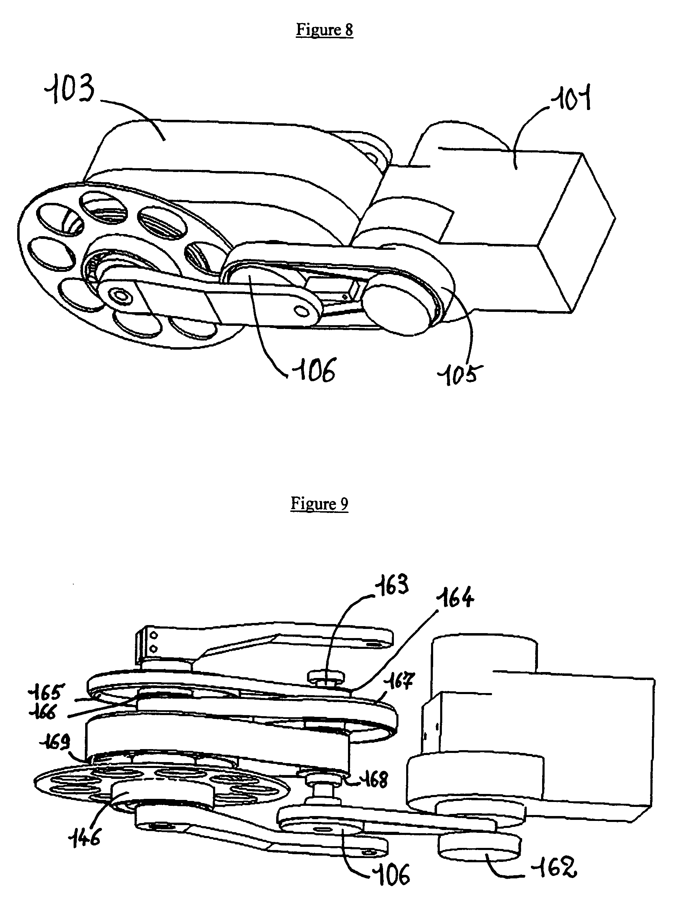

Il est à noter que sur les figures 8 à 13, les manivelles ont volontairement été représentées symétriques par rapport au plan vertical et longitudinal du vélo pour mieux représenter l'espace disponible pour implanter le dispositif d'assistance sans interférer avec le mouvement des manivelles. Les manivelles sont bien sûr normalement montées à 180° l'une de l'autre.

### Description détaillée de différents modes de réalisation :

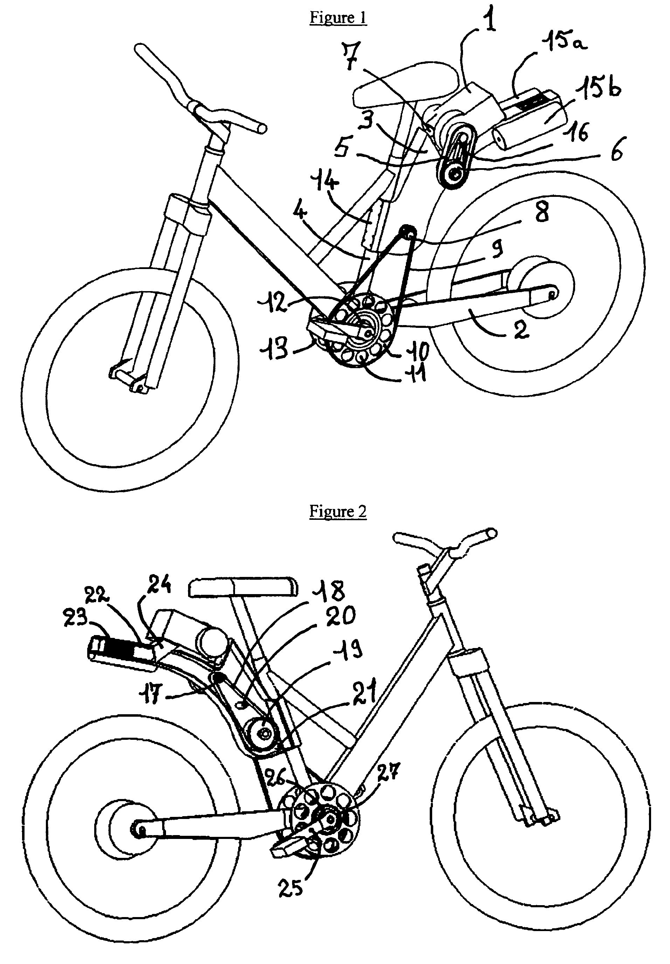

Nous voyons sur la figure 1 un premier mode de réalisation particulier sur lequel le moteur (1) est placé derrière la selle, le vélo est d'architecture très classique. Seules les bases (2) sont un peu allongées de manière à dégager suffisamment de place pour le carter de réducteur du deuxième étage (3). Cet allongement a aussi pour but d'éviter les délestages de roue avant sur les fortes déclivités.

Dans le but de ramener la longueur à une valeur assez standard et de diminuer les efforts sur la chaîne de transmission vélo, les roues sont d'un diamètre de 24 pouces. Sur ce dessin, l'assistance est placée de manière à autoriser une suspension arrière de fort débattement. Mais le vélo pourrait tout aussi bien être rigide, dans ce cas les haubans viendront se fixer sur le tube support de tube de selle (4) et le moteur et son support (2) seront placés plus bas.

Sur ce mode de réalisation, le moteur (1) et sa transmission primaire (5) sont en dehors de l'aire de pédalage, si bien que leur déport du plan médian est sans conséquence pour l'ergonomie de pédalage. Le moteur (1) et sa transmission primaire (5) n'auront donc pas besoin d'être particulièrement étroit. Ce détail permet le montage d'une courroie crantée primaire (16) assez large, ce qui permet l'utilisation d'un pas de 3mm tout au bénéfice du silence. Par ailleurs, la largeur pourra permettre le montage de deux courroies côte à côte ou l'utilisation de poulie à saignée centrale dans le but de réduire encore le bruit. Pour les mêmes raisons, on pourra aussi rogner un certain ratio de dents sur la grande poulie tout en préservant son diamètre primitif.

Le mouvement est ensuite envoyé dans l'axe du vélo sur le deuxième étage de réduction à courroie crantée, qui est placé dans le carter (3) et c'est lui qui franchira les éventuels haubans. Le mouvement transitera donc entre les haubans si le vélo en est équipé.

Sur cette vue le couvercle du carter souple de transmission primaire (5) a été retiré de manière à laisser voir le limiteur de couple (6), qui fait aussi fonction de grande poulie du premier étage de réduction. Nous voyons aussi une des fixations élastiques (7) du moteur (1). Le mouvement sort du carter secondaire par le pignon (8), qui avec la chaîne (9) et la couronne (10) constituent le troisième et dernier étage du réducteur. Cette couronne (10) est ici en matière plastique armée et comporte des évidements (11) destinés à la rendre moins rigide, pour amortir les variations de vitesse de la chaîne (9) dues à l'effet polygonale du pignon (8). La chaîne (9) est ici un modèle spécial Karting au pas de 7.6mm. Cette couronne (10) est montée sur une roue libre (12), de manière à ce que le réducteur ne soit pas entraîné lorsque l'on pédale sans assistance. Cette roue libre (12) est montée sur une entretoise tournante qui va transmettre le mouvement aux plateaux (13) de la transmission vélo.

Le carter secondaire (3) est fixé sur le tube de selle (4) par serrage, grâce à des vis qui pressent la pièce (14). Par sa flexion, ce tube de selle (4) participe à la filtration des vibrations résiduelles.

Nous voyons aussi l'implantation des deux silencieux d'échappements (15a) et (15b) sur la partie arrière du carter (3), qui peuvent trouver à cet endroit toute la place nécessaire sans aucune gêne pour l'utilisateur.

La figure 2 nous montre une perspective de droite du vélo, sur lequel le silencieux droit (15a) et le couvercle du carter secondaire (3) ont été retirés. Cela nous permet de voir l'implantation du deuxième étage de réduction par courroie crantée dans le carter (3). Ce deuxième étage d'un pas de 5mm est constitué par la petite poulie crantée (17), sa courroie (18) et la grande poulie (19). Là aussi la largeur disponible à l'intérieur du carter (3) est assez importante et les dispositions déjà décrites pour réduire le bruit de la transmission seront possibles. Notons que cette implantation qui permet l'utilisation de courroies assez larges est compatible avec des puissances assez fortes.

Dans ce mode de réalisation, le carter (3) sert de boite à air pour l'admission du moteur. Pour cette raison le carter secondaire (3) est avantageusement équipé d'au moins un pion central (20), de manière à limiter les vibrations des flancs du carter sous l'effet des ondes de pression générées par l'admission du moteur. L'air entre dans ce carter (3) grâce à un tube (21) dont le diamètre et la longueur seront définis pour atténuer certaines fréquences gênantes.

La poutre arrière (22) du carter (3) est destinée à canaliser l'air chaud de refroidissement, ainsi que le bruit, vers l'arrière du véhicule et éviter d'éventuelles recirculations d'air chaud vers l'aspiration d'air de refroidissement. Nous voyons aussi dans cette poutre(22) un silencieux (23) ici constitué par une structure nid d'abeille, dont les cellules sont orientées dans le sens du flux. Si le moteur est à refroidissement liquide, ce silencieux (23) pourra être un radiateur. La canalisation d'air chaud (24) a une jonction souple avec le moteur capable de supporter les mouvements vibratoires du moteur.

Notons que ce carter (3) aura pour ce mode de réalisation particulier les fonctions suivantes, insonorisation du second étage, support moteur, boite à air d'admission moteur, garde boue, porte bagage, support de silencieux d'échappement, orifice de sortie d'air chaud de refroidissement et accroissement de l'inertie du cadre.

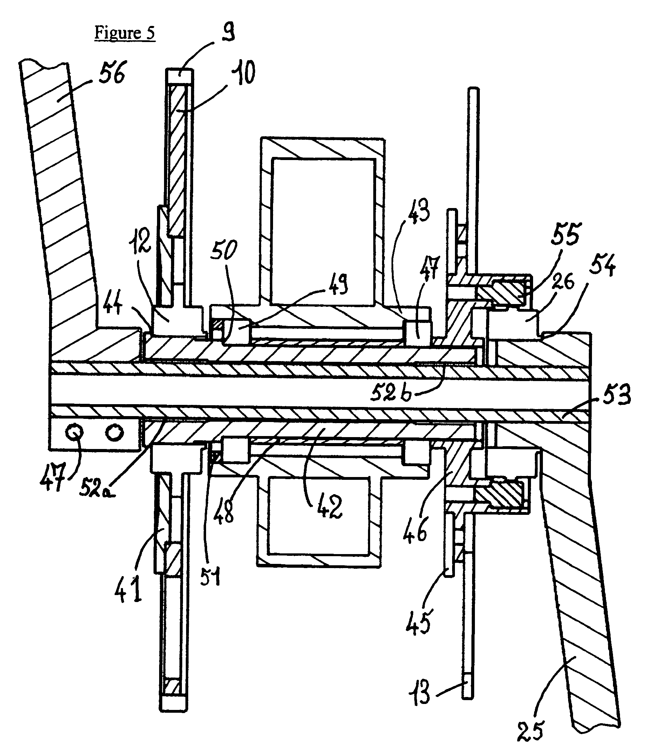

La manivelle droite (25) est équipée d'une roue libre (26) qui collabore avec un support de plateaux (27). La dite roue libre permettant la transmission de la puissance de pédalage au support de plateaux (27) ainsi que le pédalage arrière. Ces détails apparaîtront mieux sur la vue en coupe du pédalier de la figure 5.

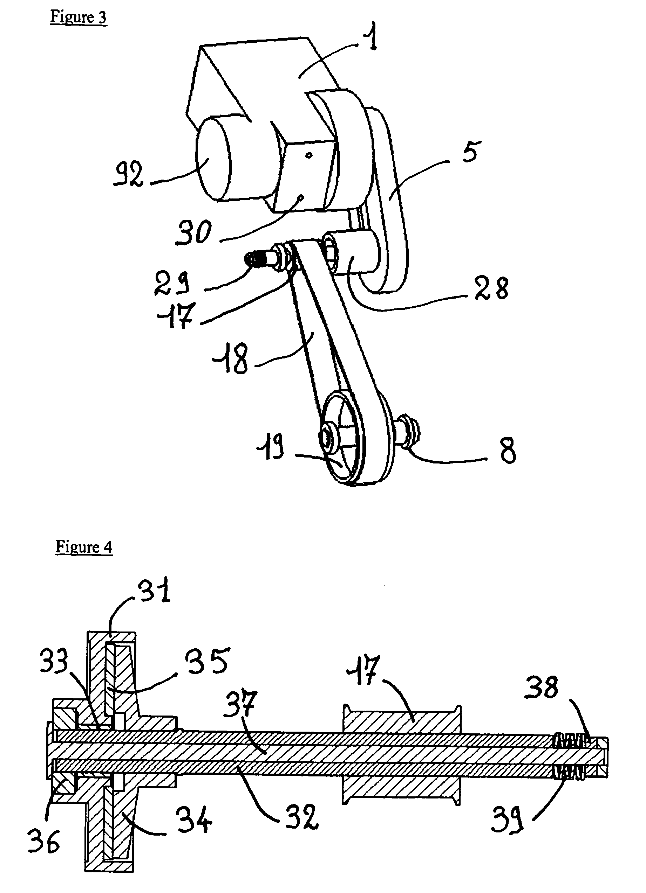

La figure 3 nous montre le moteur et les deux premiers étages de réduction. Le carter bielle souple (5) de transmission primaire est ici bien visible. Dans le montage choisi pour ce mode de réalisation, le moteur est fixé rigidement sur le carter primaire (5), car l'entraxe de la transmission primaire est assez grand. Ce qui permet à poids égal d'augmenter le moment d'inertie par rapport à l'axe d'oscillation matérialisé par le fourreau (28) du carter (5). Ce fourreau (28) est destiné à collaborer avec un embout d'entrée de puissance du carter secondaire (3), de manière à laisser le carter (5) et donc le moteur (1) libre en rotation par rapport à cet embout. L'angle que fait ce carter (3) avec le moteur (1) est choisi pour correspondre à une direction de faible vibration du moteur.

Ici le moteur est monté sur seulement deux amortisseurs de vibration dont nous voyons les trous de fixation (30). Mais le nombre et les caractéristiques de ces amortisseurs devront être adaptés à chaque moteur en tenant compte des raideurs en torsion et flexion du carter primaire (5).

Nous apercevons sur cette figure le dispositif de réglage (29) du limiteur de couple, constitué par des écrous qui pressent des rondelles élastiques. De même nous voyons l'emplacement du mécanisme de lancement manuel (92) du moteur (1). Ce mécanisme (92) est un classique lanceur à cordelette. La poignée de lancement sera avantageusement placée entre la selle et le guidon grâce à des renvois adéquats.

La figure 4 montre une vue en coupe du limiteur de couple (6). La grande poulie primaire (31) est libre en rotation sur l'arbre (32), grâce au palier auto lubrifié (33). Le plateau de friction (34) est monté serré sur l'axe (32). Ces deux organes pourront être en alliage léger, mais sur les versions de qualité un traitement de surface viendra renforcer les surfaces de frottement, ce traitement pourra être une anodisation dure. La rondelle garniture de friction (35) est ici en cuir de manière à procurer une grande douceur de glissement, mais d'autres matériaux de friction plus conventionnels pourront convenir. Cette rondelle (35) comportera des trous dans le cas du cuir ou des rainures radiales dans le cas de matériaux de friction rigide, afin de faciliter le refroidissement et l'évacuation des poussières. La poulie (31) reçoit sa poussée axiale par le roulement (36). Dans certains cas, lorsque la poussée est compatible, ce roulement (36) pourra être un simple roulement à bille à jeu majoré. Ce roulement va se comporter en roulement à contact légèrement oblique avec un avantage de coût important. Ce roulement (36) reçoit sa poussée axiale d'un tirant (37), qui lui-même est mis sous tension par des écrous (38) qui pressent des rondelles élastiques (39) contre l'arbre (32).Le mouvement limité en couple est ensuite transmis à la petite poulie (17) du second étage.

La figure 5 montre une vue en coupe du boîtier de pédalier. La couronne (10) par laquelle la puissance arrive sur le pédalier est montée sur une roue libre (12), par l'intermédiaire d'un support de couronne (41). Cette roue libre (12) est montée sur une entretoise tournante (42) placée dans le boîtier de pédalier (43).

Le montage proposé permet l'utilisation de roue libre standard de vélo. Ce qui est d'un grand intérêt économique car la conception de roue libre légère capable de résister à de forts couples est délicate. Ici la liaison en rotation est assurée par un vissage de la roue libre (12) en butée contre un épaulement (44) de l'entretoise tournante (42).

L'entretoise (42) transmet le mouvement aux plateaux (13) (45) par l'intermédiaire d'un support de plateaux (46). L'arrêt en rotation de ce support de plateaux (46) est ici assuré par un filetage à gauche sur l'entretoise tournante (42), le dit support de plateaux (46) venant en butée contre le roulement de boîtier droit (47). Une entretoise (48) reprend l'effort axial de serrage et le transmet au roulement gauche (49), qui le reporte sur l'épaulement (50) de l'entretoise tournante (42). Un écrou (51) vissé dans le boîtier de pédalier (43) bloc le roulement gauche (49) dans le boîtier.

Cette disposition autorise le montage de la plupart des plateaux (13) (45) qu'ils soient simple ou multiples. Et la roue arrière pourra recevoir un changement de rapports à dérailleur, épicycloïdal, ou mixte.

L'entretoise tournante (42) comporte des paliers (52a) (52b) destinés à autoriser la rotation de l'axe de pédalier (53) dans l'entretoise tournante (42). Le mouvement relatif de l'axe de pédalier (53) dans l'entretoise tournante (42) étant occasionnel, ces paliers (52) pourront être de simples douilles en matière plastique antifriction, ou des douilles acier garnies de PTFE, ce qui est particulièrement économique léger et peu encombrant.

L'axe de pédalier (53) est ici emmanché à force sur la manivelle de droite (25). Celle-ci reçoit une roue libre (26) ici de type vélo, vissée en buté contre un épaulement (54) de la manivelle droite (25).

Les dents ou des trous de la couronne de cette roue libre (26) collaborent avec la tête cylindrique de vis (55) solidaire du support de plateaux (46) et communique ainsi le couple de pédalage au support de plateaux (46). Ce montage permet de petits défauts de concentricité et d'alignement entre la roue libre et le support de plateaux, ce qui simplifie la production.

L'autre extrémité de l'axe de pédalier (53) est cannelée, de même que la manivelle gauche (56), qui possède aussi un dispositif de serrage (47). La manivelle gauche (47) est placée en butée contre une rondelle de friction et serrée, ce qui permet le réglage du jeu latéral du pédalier.

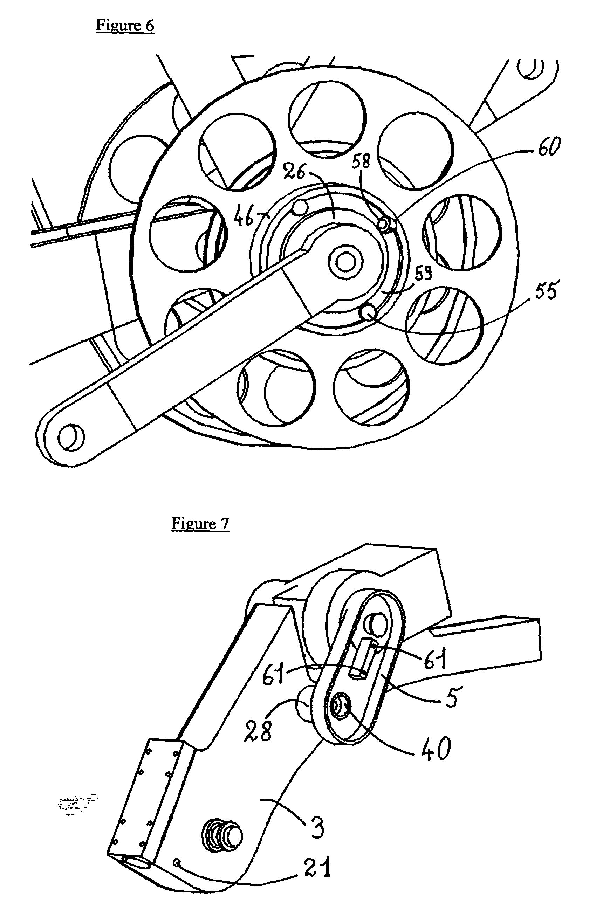

La figure 6 montre plus précisément la collaboration entre la roue libre (26) et le support de plateaux (46). Ici la couronne (59) de la roue libre (26) de type vélo ne comporte pas des dents mais 4 trous (58). Le support de plateaux comporte 4 lamages (60) destinés à recevoir la tête cylindrique de vis (55). La tête de ces vis (55) reçoit le couple transmis par les trous (58) de la roue libre (26). Le dispositif fonctionne tout aussi bien avec une couronne (59) qui comporterait des dents à la place des trous (58) à la condition, bien sûr, que les lamages (60) correspondent à des creux de dents.

La figure 7 montre l'articulation du carter souple de transmission primaire (5) sur le carter secondaire (3). Cette articulation s'opère par une libre rotation du fourreau (28) du carter (5) sur l'embout d'entrée de puissance (40) du carter secondaire (3).

De manière à ce que le carter primaire (5) ait une faible rigidité en torsion, le couvercle du carter primaire (non représenté) est fixé par des vis centrales qui viendront dans les taraudages (61).

Nous apercevons aussi le trou d'aspiration d'air du tube (21) destiné à laisser entrer l'air dans le carter secondaire (3) pour l'admission du moteur.

Certaines dispositions ne sont pas représentées, ainsi l'embrayage centrifuge est placé sur le moteur de manière à être le plus léger possible. Il pourrait être placé sur la sortie du premier étage avec un poids plus important et une plus grande difficulté de réalisation pour obtenir un régime précis de collage. L'embrayage sur sortie de transmission primaire offre par contre une meilleure répartition du poids en allégeant le moteur et alourdissant le support moteur, ce qui est bénéfique au fonctionnement des fixations élastiques (7) du moteur, de même cela diminue la largeur du moteur.

Le carburateur non représenté est fixé sur le support moteur (3), si possible en dehors du carter d'insonorisation moteur (non représenté) et alimente le moteur à travers une canalisation souple capable de supporter les mouvements du moteur. La longueur et le diamètre de cette canalisation seront accordés, de manière à favoriser l'établissement du couple moteur au régime souhaité.

Le filtre à air se trouvera entre le carburateur et le carter support moteur (3), de manière à protéger le moteur, des dégagements de fibres et de caoutchouc de la transmission secondaire. Un autre filtre, plus grossier pourra trouver sa place sur l'orifice d'entré d'air (21) du carter secondaire (3) de manière à protéger la transmission.

Le capot moteur insonorisant (non représenté) englobera avantageusement le carter primaire de réduction (5), il comporte une entrée d'air de refroidissement dirigée vers l'arrière du vélo. Cette entrée d'air est avantageusement équipée d'un amortisseur sonore en nid d'abeille. Ce pourrait aussi être un radiateur si le moteur est à refroidissement liquide. Ce capot est fixé sur le support moteur (3), il est constitué de deux demi-coquilles fixées sur le support moteur (3) et entre elles, à l'aide de fixation à levier type chaussures de ski. Ce carter insonorisant est réalisé en mousse de matière plastique et comporte un garnissage interne en matériaux d'amortissement phonique ici du feutre de laine.

Le moteur sera avantageusement équipé d'un ou deux arbres d'équilibrage dynamique. De même le refroidissement sera de préférence liquide. Ici le moteur entraîne en continu un ventilateur et le flux d'air entre dans le capot d'insonorisation (non représenté) et en ressort. Le moteur n'est donc pas enfermé.

La commande de gaz est constituée par une manette stable sur la position demandée, jusqu'à ce que le frein soit actionné. Cette fonction étant assurée par la force de rappel de la poignée de frein qui agit sur un élément accroissant la friction de la dite manette de gaz. Elle est placée sur le guidon au-dessus de la poignée d'un frein, de préférence à droite.

Le coupe contact s'opère sur une position forcée de la manette au delà de la position ralenti.

Selon une première variante non représentée la grande largeur disponible sur la transmission primaire autorise l'utilisation de courroies plates multi V. L'avantage de ces courroies est de pouvoir s'enrouler sur des poulies de petits diamètres. Un galet tendeur pourra être nécessaire pour la tension et pour augmenter l'arc de contact de la courroie sur la petite poulie. Le rendement de ces courroies est moins bon que celui des courroies crantées et il sera parfois impossible d'enfermer la transmission dans un carter non ventilé. Dans ce cas la transmission sera avantageusement placée sous le capot d'insonorisation moteur. Une autre solution est de faire aspirer le moteur dans le carter primaire, ce qui constitue une ventilation en général suffisante. Dans ce cas une canalisation conduira l'air du carter secondaire (3) vers le carter primaire (5). Dans ce cas de figure le filtre à air se déplacera à un endroit adéquat pour protégé le moteur des poussières.

Selon une deuxième variante non représentée, une des manivelles reçoit un disque ici en matière plastique. Ce disque pourra servir à éviter le contact des vêtements avec une des couronnes de transmission droite ou gauche. Mais sa fonction principale est de collaborer avec un détecteur de rotation des manivelles.

Pour cela la périphérie du disque comporte des trous ou des dents dont le détecteur perçoit le mouvement et le sens.

Un servomoteur en tout ou rien agit sur la gaine du câble de commande de gaz. En cas de détection d'une rotation des manivelles dans le bon sens par le capteur de rotation, le servomoteur allonge la gaine et rend ainsi la commande de gaz active.

Selon une troisième variante non représentée le moteur est à refroidissement liquide et le moteur est totalement enfermé dans son capot d'insonorisation. Le flux d'air de refroidissement ne transite pas sous ce capot. Le radiateur exposé au flux d'air dû à la vitesse du véhicule assure le refroidissement normal du véhicule, mais un ventilateur électrique renforce le flux lorsqu'il est insuffisant.

Le radiateur n'occasionnera aucune gêne thermique pour le cycliste s'il est placé sur le support moteur (3) symétriquement à la transmission primaire (5).

Dans cette version la partie du tuyau d'échappement qui est sous le capot d'insonorisation est doublé d'une enveloppe isolante.

Selon une cinquième variante non représenté, la chaîne du troisième étage est remplacée par une courroie crantée. La largeur de cette courroie est limitée par la présence des bases du cadre, cette variante ne pourra donc pas être d'une puissance importante.

La figure 8 nous montre une perspective d'un deuxième mode de réalisation particulier dans lequel l'assistance est composée d'un bloc moto-réducteur-pédalier entièrement réalisé à base de courroies crantées. Le moteur (101) et son carter primaire de réduction (105) sont ici placés dans l'axe du carter principal (103) pour des raisons de commodité de dessin. Mais il est clair que le carter (105) et le moteur (101) pourront prendre d'autres orientations pour des raisons d'implantation ou de lutte contre les vibrations. L'entrée de puissance dans le carter principal (103) se fait par le côté de la ligne de chaîne, ici côté droit.

Ce type d'assistance se monte sur un cadre de vélo non conventionnel, ce cadre sera notamment dépourvu de boîtier de pédalier. Le carter principal (103) comportera des pattes de fixation non représentées qui permettrons de le fixer au cadre, de recevoir les fixations élastiques du moteur et éventuellement de recevoir un bras oscillant de suspension arrière. Le carter (105) possède les mêmes fonctions que sur le premier mode de réalisation, idem pour le limiteur de couple (106) qui protège la transmission vélo.

Il est à noter qu'avec ce genre d'assistance l'engin ressemble assez peu à un vélo et s'apparente visuellement d'avantage à un cyclomoteur.

La figure 9 nous montre la cinématique de l'assistance qui comporte 4 étages. Ici l'embrayage (162) est reporté à l'extérieur de la petite poulie de transmission primaire, ce qui autorise un moteur un peu plus large si le moteur n'entre pas dans la zone balayée par les manivelles.

La cinématique est la suivante, le moteur communique le mouvement à l'embrayage (162) à travers la petite poulie primaire qui est solidaire de la cloche d'embrayage et libre en rotation autour de l'arbre moteur.

Le mouvement va ensuite jusqu'à la grande poulie primaire qui fait aussi office de limiteur de couple (106), qui le transmet à l'arbre intermédiaire (163). Le mouvement va ensuite sur la petite poulie (164) du deuxième étage qui est fixée sur l'arbre intermédiaire (163). Puis le mouvement va sur la grande poulie (165) du deuxième étage qui est solidaire de la petite poulie (166) du troisième étage, l'ensemble est libre en rotation sur l'axe de pédalier. Le mouvement part ensuite vers la grande poulie (167) du troisième étage, qui est solidaire de la petite poulie (168) du quatrième étage, l'ensemble est libre en rotation sur l'axe intermédiaire (163). Enfin le mouvement arrive sur la grande poulie (169) du quatrième étage qui le transmet via une roue libre à une entretoise tournante, qui elle-même le transmet au support de plateaux (146). Le mouvement transmis par les manivelles au support de plateaux (146) s'effectue comme sur le premier mode de réalisation.

Dans ce mode de réalisation les grandes et les petites poulies pourront avoir le même nombre de dents et le même pas, sur les trois derniers étages, seule leurs largeurs évoluent en fonction du couple qu'elles transmettent. Le taux de réduction est ici proche de 3 pour chaque étage et le pas choisi est de 5mm.

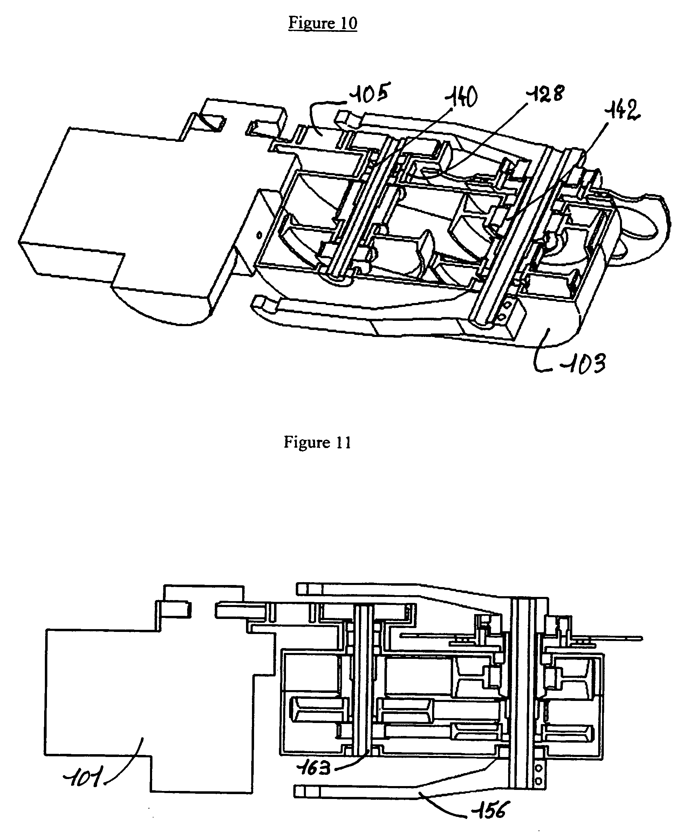

La figure 10 montre une perspective en coupe du second mode de réalisation, cette figure nous montre que sous un aspect massif, cette réalisation contient surtout de l'air et ce mode de réalisation pourra être très léger.

Bien entendu le carter principal (103) va servir de boite à air pour l'admission du moteur. Pour cela tous les roulements à billes ou aiguilles sont de type étanche et lubrifiés à vie.

Nous voyons sur cette vue l'articulation du carter primaire (105) grâce à son fourreau (128) qui peut tourner autour de l'embout (140) d'entrée de puissance du carter (103). L'entretoise tournante (142) est plus courte que sur le premier mode de réalisation. Malgré ses 4 étages le rendement est assez bon du fait que la plupart des frottements se font à des vitesses différentielles faible et les couples de frottement sont ici moteurs sur les trois derniers étages.

Mais la faible largeur disponible pour chaque étage limitera la puissance admissible.

La figure 11 en coupe permet de bien voir l'utilisation de la place disponible pour chaque fonction. Les hachures de coupe ne sont pas tracées pour ne pas trop alourdir le dessin. Le plan de joint du carter principal (103) est dans l'axe du plan médian du vélo. Ici le dessin limite le déport de manivelle par rapport au plan médian du vélo, à une valeur inférieur au 100mm précédemment décrit au chapitre implantation.

Nous voyons aussi que le moteur peut être légèrement plus large s'il n'entre pas dans l'aire balayée par les manivelles.

Certaines implantations permettent même de le placer hors de l'aire de pédalage, ce qui autorise un moteur encore plus large, à la condition d'être décentré.

Nous voyons qu'une place importante entre l'arbre intermédiaire (163) et la manivelle gauche (156) est inutilisée. Nous verrons comment optimiser cet espace dans le troisième mode de réalisation, avec une solution applicable sur ce deuxième mode de réalisation.

Selon une variante non représentée le carter réducteur (103) est cloisonné et le dernier étage est à chaîne.

Selon une variante non représentée le carter est cloisonné et le dernier étage est à engrenages, un engrenage supplémentaire venant compenser la différence d'entre axes.

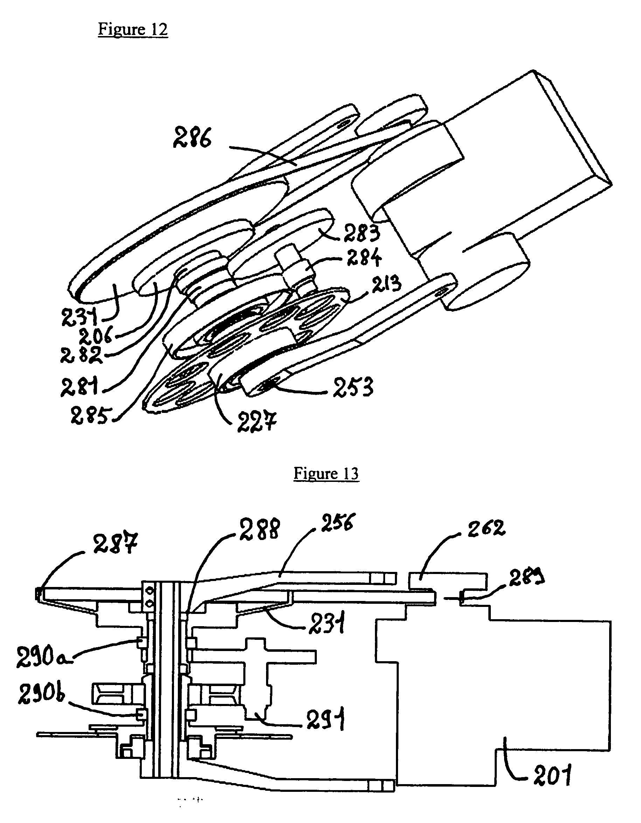

La figure 12 montre une vue en perspective de la cinématique d'un troisième mode de réalisation, organisé comme un bloc moto-réducteur-pédalier particulièrement compact, composé de seulement 3 étages de réductions. Le premier est à courroie et les deux suivants à engrenages.

La particularité principale de ce mode de réalisation est que la grande poulie (231) du premier étage est concentrique avec l'axe de pédalier (253). Ce montage autorise un très grand diamètre pour cette poulie qui pourra même dépasser celui du grand plateau (213) de la transmission vélo, si l'on accepte une réduction de la garde au sol du vélo.

Cette poulie (231) transmet le mouvement au limiteur de couple (206), qui va lui le transmettre au petit pignon (281) du deuxième étage, via l'entretoise tournante (282). Le mouvement va ensuite sur le grand pignon (283) de deuxième étage, qui est solidaire du petit pignon (284) de troisième étage. Le pignon (284) transmet donc le mouvement au grand pignon (285), qui transmet le mouvement au support de plateau (227), via une roue libre et une seconde entretoise tournante.

Le grand taux de réduction du premier étage permet de limiter la vitesse et donc le bruit des deux étages suivants à engrenages. Le premier étage à courroie donne une certaine souplesse à la transmission pour amortir les vibrations de cycle.

Ce premier étage est ici réalisé à base de courroie plate multi-V. Un galet tendeur pourra être adjoint pour permettre le réglage de tension et augmenter l'arc d'enroulement de la courroie (286) sur la petite poulie primaire.

Cette transmission primaire sera avantageusement placée dans un carter primaire souple, comme sur les autres modes de réalisation.

La figure 13 nous montre la cinématique en coupe selon un plan passant par les trois axes (pédalier, intermédiaire, moteur), qui sont ici alignés pour des raisons de représentation. Une disposition particulière de la grande poulie (231) permet de déporter son chemin de courroie (287) au-delà de la face interne (288) de la manivelle gauche (256). Cette disposition dégage beaucoup de place pour l'implantation des autres organes et autorise une plus grande largeur pour le moteur (201). Cette disposition est applicable pour le second étage du second mode de réalisation.

Sur la figure le moteur (201) n'entre pas dans l'aire balayée par les manivelles et dans ce cas le déplacement de l'embrayage centrifuge (262) à l'extérieur de la petite poulie (289) dégage aussi de la largeur pour le moteur.

Le carter principal non représenté supporte les roulements de pédalier (290a) (290b) ainsi que les roulements de l'arbre intermédiaire (291) et contient de l'huile. Il ne pourra donc pas servir de boite à air pour le moteur.

Selon une première variante le premier étage est à courroie crantée.

Selon une deuxième variante non représentée, les deuxième et troisième étages sont à courroie crantée.

Selon une troisième variante non représentée, le moteur très étroit et de préférence équilibré forme un bloc unique et rigide avec le réducteur, dont les trois étages sont à engrenages, tous englobés dans le carter. Un des étages comportera un amortisseur de vibration de cycle.

## Revendications

1. Dispositif d'assistance au pédalage pour engin léger, en particulier vélo, équipé de pédales et d'une transmission, ce dispositif d'assistance comportant un moteur thermique (1 ; 101 ; 201) équipé d'un réducteur en couplage mécanique avec un élément recevant une puissance musculaire de pédalage d'un utilisateur de l'engin léger le dispositif d'assistance comprenant une enveloppe encapsulant le moteur thermique, **caractérisé en ce que** l'enveloppe est découplée mécaniquement du moteur thermique.

2. Dispositif selon la revendication 1, **caractérisé en ce que** l'enveloppe comprend une paroi intérieure et une paroi extérieure entre lesquelles est constitué un ou plusieurs réservoirs pouvant contenir un liquide.

3. Dispositif selon la revendication 2, **caractérisé en ce que** le liquide est un liquide de refroidissement et échange de la chaleur avec l'air ambiant via la paroi extérieure, la paroi extérieure étant éventuellement ondulée ou ailetée.

4. Dispositif selon l'une des revendications précédentes, **caractérisé en ce que** l'enveloppe est constituée par un matériau à faible transmission sonore comme une mousse de matière plastique.

5. Dispositif selon l'une des revendications précédentes, **caractérisé en ce que** l'enveloppe comprend une garniture en matériau isolant phonique, comme un feutre, notamment un feutre de laine ou une mousse à cellules ouvertes.

6. Dispositif selon l'une des revendications précédentes, **caractérisé en ce que** le moteur est à refroidissement liquide et **en ce que** deux canalisations traversent l'enveloppe pour permettre au liquide d'entrer et sortir de l'enveloppe, un échangeur de chaleur connecté à ces canalisations étant disposé à l'extérieur de l'enveloppe.

7. Dispositif selon l'une des revendications 1 à 5, **caractérisé en ce que** le moteur est à refroidissement à air et **en ce qu'**une turbine aspire et refoule de l'air dans l'enveloppe à travers deux canalisations d'entrée et de sortie d'air dirigées vers l'arrière ou les cotés du dispositif.

8. Dispositif selon la revendication 7, **caractérisé en ce qu'**une canalisation souple guide l'air chaud du moteur vers la canalisation de sortie de l'enveloppe, de manière à éviter des recirculations d'air chaud dans l'enveloppe.

9. Dispositif selon l'une des revendications 1 à 5, **caractérisé en ce que** le refroidissement du moteur est mixte air et liquide et **en ce qu'**une turbine aspire et refoule de l'air dans l'enveloppe à travers deux canalisations d'entrée et de sortie d'air dirigées vers l'arrière ou les côtés du dispositif.

10. Dispositif selon l'une des revendications précédentes, **caractérisé en ce que** le moteur thermique comprend un ou deux arbres d'équilibrage.

11. Dispositif selon l'une des revendications précédentes, **caractérisé en ce que** l'enveloppe comprend un orifice d'entrée de gaz d'alimentation du moteur thermique, cet orifice étant en communication avec un support moteur creux (3 ; 103), ce support définissant un volume d'admission d'air d'alimentation du moteur thermique.

12. Dispositif selon l'une des revendications précédentes, **caractérisé en ce que** le moteur thermique comprend un carburateur disposé à l'extérieur de l'enveloppe.

13. Dispositif selon l'une des revendications précédentes, **caractérisé en ce que** le moteur thermique comprend un pot d'échappement fixé sur un support du moteur thermique ou destiné à être fixé sur un tube de cadre du vélo recevant le tube de selle ou destiné à être fixé sur un hauban de cadre du vélo.

14. Dispositif selon l'une des revendications précédentes, **caractérisé en ce que** la transmission est du type à changement de rapports, le couplage mécanique s'effectuant en amont de ladite transmission à changement de rapports de manière à ce que le moteur bénéficie desdits changements de rapports.

15. Engin léger, en particulier vélo, comprenant un dispositif d'assistance selon l'une des revendications précédentes.

## Claims

1. Pedaling assistance device for a light vehicle, in particular a bicycle, equipped with pedals and a transmission, this assistance device comprising a heat engine (1; 101; 201) equipped with a reducing gear mechanically coupled with an element receiving muscular pedaling power from a user of the light vehicle, the assistance device comprising a jacket encapsulating the heat engine, **characterized in that** the jacket is mechanically decoupled from the heat engine.

2. Device according to Claim 1, **characterized in that** the jacket comprises an inner wall and an outer wall between which one or more tanks are formed that can contain a liquid.

3. Device according to Claim 2, **characterized in that** the liquid is a coolant and exchanges heat with the ambient air via the outer wall, the outer wall possibly being corrugated or finned.

4. Device according to one of the preceding claims, **characterized in that** the jacket is made of a material with low sound transmission such as a foam made of plastic material.

5. Device according to one of the preceding claims, **characterized in that** the jacket comprises a packing made of sound barrier material, such as a felt, notably a wool felt or an open-cell foam.

6. Device according to one of the preceding claims, **characterized in that** the engine has liquid cooling and **in that** two ducts pass through the jacket to allow the liquid to enter and leave the jacket, a heat exchanger connected to these ducts being arranged outside the jacket.

7. Device according to one of Claims 1 to 5, **characterized in that** the engine has air cooling and **in that** a turbine sucks and discharges air into and out of the jacket through two air inlet and outlet ducts directed toward the rear or the sides of the device.

8. Device according to Claim 7, **characterized in that** a flexible duct guides the hot air from the engine to the outlet duct of the jacket, so as to avoid having hot air recirculate inside the jacket.

9. Device according to one of Claims 1 to 5, **characterized in that** the cooling of the engine is a mixture of air and liquid and **in that** a turbine sucks and discharges air into and out of the jacket through two air inlet and outlet ducts directed toward the rear or the sides of the device.

10. Device according to one of the preceding claims, **characterized in that** the heat engine comprises one or two balancing shafts.

11. Device according to one of the preceding claims, **characterized in that** the jacket comprises a gas inlet orifice to supply the heat engine, this orifice being in communication with a hollow motor support (3; 103), this support defining an air intake volume for supplying the heat engine.

12. Device according to one of the preceding claims, **characterized in that** the heat engine comprises a carburetor placed outside the jacket.

13. Device according to one of the preceding claims, **characterized in that** the heat engine comprises an exhaust muffler fixed to a support of the heat engine or intended to be fixed to a frame tube of the bicycle receiving the saddle tube or intended to be fixed to a frame stay of the bicycle.

14. Device according to one of the preceding claims, **characterized in that** the transmission is of the ratio-changing type, the mechanical coupling being effected upstream of said ratio-changing transmission so that the engine benefits from said changes of ratio.

15. Light vehicle, in particular a bicycle, comprising an assistance device according to one of the preceding claims.

## Patentansprüche

1. Trethilfevorrichtung für ein leichtes Gerät, insbesondere ein Fahrrad, das mit Pedalen und einem Getriebe ausgestattet ist, wobei diese Hilfsvorrichtung einen Verbrennungsmotor (1, 101; 201) aufweist, der mit einem Untersetzungsgetriebe in mechanischer Verbindung mit einem Element ausgestattet ist, das eine Tretmuskelkraft eines Benutzers des leichten Geräts empfängt, wobei die Hilfsvorrichtung eine den Verbrennungsmotor einkapselnde Hülle enthält, **dadurch gekennzeichnet, dass** die Hülle mechanisch vom Verbrennungsmotor abgekoppelt ist.

2. Vorrichtung nach Anspruch 1, **dadurch gekennzeichnet, dass** die Hülle eine Innenwand und eine Außenwand enthält, zwischen denen ein oder mehrere Behälter ausgebildet sind, die eine Flüssigkeit enthalten können.

3. Vorrichtung nach Anspruch 2, **dadurch gekennzeichnet, dass** die Flüssigkeit eine Kühlflüssigkeit ist und über die Außenwand Wärme mit der Umgebungsluft austauscht, wobei die Außenwand ggf. gewellt oder gerippt ist.

4. Vorrichtung nach einem der vorhergehenden Ansprüche, **dadurch gekennzeichnet, dass** die Hülle aus einem Material mit geringer Schallübertragung wie einem Kunststoffschaum besteht.

5. Vorrichtung nach einem der vorhergehenden Ansprüche, **dadurch gekennzeichnet, dass** die Hülle eine Auskleidung aus einem Schalldämmungsmaterial wie einem Filz, insbesondere einem Wollfilz, oder einem Schaum mit offenen Zellen enthält.

6. Vorrichtung nach einem der vorhergehenden Ansprüche, **dadurch gekennzeichnet, dass** der Motor eine Flüssigkühlung hat, und dass zwei Rohrleitungen die Hülle durchqueren, um es der Flüssigkeit zu ermöglichen, in die die Hülle ein und aus ihr auszutreten, wobei ein mit diesen Rohrleitungen verbundener Wärmetauscher außerhalb der Hülle angeordnet ist.

7. Vorrichtung nach einem der Ansprüche 1 bis 5, **dadurch gekennzeichnet, dass** der Motor eine Luftkühlung hat, und dass eine Turbine über zwei Lufteingangs- und ausgangsrohrleitungen, die nach hinten oder zu den Seiten der Vorrichtung gerichtet sind, die Luft in die Hülle ansaugt und aus ihr hinaus drückt.

8. Vorrichtung nach Anspruch 7, **dadurch gekennzeichnet, dass** eine Schlauchleitung die warme Luft des Motors zur Ausgangsrohrleitung der Hülle führt, um Rückführungen warmer Luft in die Hülle zu vermeiden.

9. Vorrichtung nach einem der Ansprüche 1 bis 5, **dadurch gekennzeichnet, dass** die Kühlung des Motors eine gemischte Luft- und Flüssigkeitskühlung ist, und dass eine Turbine Luft über zwei Lufteingangs- und ausgangsrohrleitungen in die Hülle ansaugt und aus ihr hinaus drückt, die nach hinten und zu den Seiten der Vorrichtung gerichtet sind.

10. Vorrichtung nach einem der vorhergehenden Ansprüche, **dadurch gekennzeichnet, dass** der Verbrennungsmotor eine oder zwei Ausgleichswellen enthält.

11. Vorrichtung nach einem der vorhergehenden Ansprüche, **dadurch gekennzeichnet, dass** die Hülle eine Eingangsöffnung für Speisegas des Verbrennungsmotors enthält, wobei diese Öffnung mit einem hohlen Motorhalter (3; 103) in Verbindung steht, wobei dieser Halter ein Speiseluft-Ansaugvolumen des Verbrennungsmotors definiert.

12. Vorrichtung nach einem der vorhergehenden Ansprüche, **dadurch gekennzeichnet, dass** der Verbrennungsmotor einen Vergaser enthält, der außerhalb der Hülle angeordnet ist.

13. Vorrichtung nach einem der vorhergehenden Ansprüche, **dadurch gekennzeichnet, dass** der Verbrennungsmotor einen Auspuff enthält, der an einem Halter des Verbrennungsmotors befestigt, oder dazu bestimmt ist, an einem Rahmenrohr des Fahrrads befestigt zu werden, das das Sattelrohr aufnimmt, oder dazu bestimmt ist, an einer Rahmenstrebe des Fahrrads befestigt zu werden.

14. Vorrichtung nach einem der vorhergehenden Ansprüche, **dadurch gekennzeichnet, dass** das Getriebe ein Schaltgetriebe ist, wobei die mechanische Verbindung vor dem Schaltgetriebe erfolgt, damit der Motor von den Schaltvorgängen profitiert.

15. Leichtes Gerät, insbesondere Fahrrad, das eine Hilfsvorrichtung nach einem der vorhergehenden Ansprüche enthält.
